# EUROPÄISCHE PATENTSCHRIFT

(11) **EP 3 427 016 B1**
(45) Veröffentlichungstag und Bekanntmachung des Hinweises auf die Patenterteilung: **12.02.2020**
(21) Anmeldenummer: 17712406.2
(22) Anmeldetag: 02.03.2017
(51) Int. Cl.: G01G 13/00, G01G 13/02, G01G 13/24, G01G 13/285, G01G 17/06, G01G 17/00

(54) **VORRICHTUNG ZUR DOSIERUNG EINER SUBSTANZ**
DEVICE FOR METERING A SUBSTANCE
DISPOSITIF SERVANT AU DOSAGE D'UNE SUBSTANCE

(30) Priorität: 07.03.2016 CH 2872016
(43) Veröffentlichungstag der Anmeldung: 16.01.2019
(73) Patentinhaber: Chemspeed Technologies AG, 4414 Füllinsdorf (CH)
(72) Erfinder: GUELLER, Rolf, 5027 Herznach (CH); CHAPPUIS, Pascal, 4242 Laufen (CH); SCHINDLER, Markus, 6373 Ennetbürgen (CH)
(74) Vertreter: Bohest AG
(86) Internationale Anmeldenummer: PCT/CH2017/000020
(87) Internationale Veröffentlichungsnummer: WO 2017/152293

(56) Entgegenhaltungen:
- WO-A1-2006/075201

## Beschreibung

Die vorliegende Erfindung betrifft eine Vorrichtung und ein Verfahren zur Dosierung einer Substanz in einen Zielbehälter gemäss den Oberbegriffen der unabhängigen Patentansprüche 1 und 17.

Substanzen zu dosieren ist eine der Kernherausforderungen in der Probenaufbereitung und in der Vorbereitung von Formulierungen und chemischen Reaktionen. Eine besondere Herausforderung ist dabei immer, mit einem möglichst geringen technischen Aufwand eine möglichst grosse Präzision und Genauigkeit der Dosierung sicherzustellen. Dies ist zwar bei Mengen über 20-50 mg technisch einigermassen einfach umzusetzen, doch unterhalb dieser Grenzen ist es sehr aufwändig und kostenintensiv, genaue und präzise Dosierungen vorzunehmen. Speziell wenn Dosierungen im Milligramm- oder Sub-Milligramm-Bereich vorzunehmen sind, lassen sich traditionelle Flüssig- oder Feststoffdosierwerkzeuge kaum mehr sinnvoll (sprich genau und präzise) einsetzen. Dies gilt insbesondere, wenn es sich um Dosierungen von vielen verschiedenen Substanzen handelt und die Substanzen, bzw. ein Teil davon, aus einem Behälter in einen weiteren Behälter gebracht werden sollen.

Traditionelle Dosierwerkzeuge wie pumpengesteuerte Dosiernadeln oder Feststoff-Dosiergeräte, die Pulver oder Partikel einer festen Substanz z.B. mittels Schneckengetriebe oder mühlenartigen Fördermechanismen dosieren, scheitern bereits im ein- bis zweistelligen Milligramm-Bereich an z.B. den kleinstmöglichen Tropfengrössen der zu dosierenden Flüssigkeiten (oft ca. 10-20 mg) oder den kleinstmöglichen zu portionierenden Feststoffmengen (ebenfalls im Bereich 10-20 mg). Eine präzise und reproduzierbare Dosierung von noch kleineren Mengen ist mit solchen Geräten nicht möglich. Insbesondere aber sind diese Werkzeuge prinzipiell nicht geeignet, wenn z.B. aus einer Substanzbibliothek einzelne Substanzen herausgepickt werden sollen, denn es macht keinen Sinn, eine solche Substanz zuerst in einen Extruder zu geben, um dann eine einzige Dosierung vorzunehmen und dann das gleiche bei den weiteren Substanzen.

In der WO 03/098170 A1 ist eine rechnergesteuerte Dosiervorrichtung beschrieben, die für Substanzen praktisch jeglicher Konsistenz (pulverförmig, flüssig, ölig, pastös, harzig) geeignet ist. In einer Ausführungsform ist die Dosiervorrichtung mit einem Nadelabfüllkopf ausgestattet, der an einer elektronischen Waage befestigt ist, wobei der Nadelabfüllkopf zusammen mit der Waage an einem Roboterarm montiert ist und von diesem in drei Dimensionen bewegt werden kann. Der Nadelabfüllkopf besitzt einen Nadelträger, an dem eine Vielzahl von Dosiernadeln in Form von nach unten offenen Röhrchen gruppenweise unterschiedlichen Durchmessers von 0.1-5 mm gehaltert ist. Zur Substanzaufnahme werden die Dosiernadeln bzw. Röhrchen mittels des Roboterarms in die aufzunehmende, in einem Vorratsbehälter vorliegende Substanz definiert eingetaucht bzw. eingestochen, wobei eine je nach Durchmesser der Röhrchen unterschiedliche Substanzmenge in die unteren Enden der Röhrchen eindringt und dort hängen bleibt. Daraufhin wird der Nadelabfüllkopf angehoben und über die Öffnung des zu befüllenden Aufnahmebehälters geführt. Anschliessend werden im Nadelabfüllkopf vorgesehene Kolben selektiv von oben in die Röhrchen eingeführt und dadurch die in den Röhrchen befindliche Substanz aus den Röhrchen in den Aufnahmebehälter ausgestossen. Die Dosierung erfolgt dabei schrittweise, d.h. die Entleerung der Röhrchen beginnt mit den Röhrchen grösseren Durchmessers und setzt sich nach Röhrchen kleineren Durchmessers hin fort, bis im Rahmen dieser schrittweisen Annäherung die gewünschte Dosiermenge erreicht ist. Die jeweils bei einem Dosierschritt (der Entleerung eines Röhrchens) in den Aufnahmebehälter zudosierte Substanzmenge wird über die Waage erfasst, und die elektronische Steuerung veranlasst, sofern die gewünschte Dosiermenge noch nicht erreicht ist, die schrittweise Entleerung der weiteren Röhrchen. Zusätzlich kann eine weitere Waage grösserer Präzision vorgesehen sein, auf der der Aufnahmebehälter steht und mit welcher die exakte Erfassung der tatsächlichen Dosiermenge möglich ist.

Die aus der WO 03/098170 A1 bekannte Dosiervorrichtung löst zwar das Problem unterschiedlicher Substanzkonsistenzen, ist aber für die Befüllung von kleinen und kleinsten Substanzbehältern mit Aufnahmevolumina im Milligramm- oder Sub-Milligramm-Bereich nicht oder zumindest nur bedingt geeignet. Ein Grund dafür liegt darin, dass solche Substanzbehälter (sog. Vials) sehr klein sind und normalerweise dicht nebeneinander gepackt in Aufnahmegestellen (Racks) angeordnet sind und die Substanzen oft in so geringen Mengen vorhanden sind, dass oft nicht einmal mehr der Boden bedeckt ist bzw. die Substanz an den Behälterwänden klebt. Da die Öffnungen dieser Substanzbehälter viel zu klein sind, um alle Röhrchen des Nadelfüllkopfs gleichzeitig aufzunehmen, müsste der Nadelfüllkopf für jeden einzelnen Dosiervorgang bewegt werden, um das entsprechende Röhrchen genau über dem Substanzbehälter zu positionieren. Dabei würden sich aber zumindest einige der jeweils benachbarten Röhrchen über einem oder mehreren der anderen Substanzbehälter im Aufnahmegestell befinden und die Gefahr von Kontamination dieser Substanzbehälter wäre dann sehr hoch. Ein ähnliches Problem ergibt sich daraus, dass auch die Vorratsbehälter, aus denen die abzufüllenden Substanzen entnommen werden, eine gewisse Mindestgrösse haben müssen, damit die Röhrchen des Nadelabfüllkopfs in diese eindringen können. In Substanzbibliotheken liegen aber oftmals viele Substanzen in so geringen Mengen vor, dass die Vorratsbehälter einfach zu klein sind für den Einsatz der bekannten Dosiervorrichtung.

Ein weiteres grosses Problem liegt in der inhärenten Kontaminationsgefahr an sich. Da nicht mit Sicherheit ausgeschlossen werden kann, dass Substanzspuren in oder an den mit Substanz in Berührung stehenden Teilen eines Flüssig- oder Feststoffdosiergeräts haften bleiben, müssen jeweils vor dem Dosieren einer anderen Substanz die entsprechenden Teile gründlich gereinigt werden. Dies ist jedoch relativ arbeitsaufwändig. Alternativ könnten natürlich auch die Dosierwerkzeuge oder zumindest die substanztragenden Teile davon (Dosierwerkzeuge wie Nadeln, Flüssigkeitskartuschen, Feststoffcontainer, ...) als Ganzes ausgewechselt werden. Dies wäre aber ebenfalls aufwändig und würde vor allem die Bereithaltung einer grossen Zahl von Dosiergeräten und Dosierwerkzeugen erfordern, was aus wirtschaftlichen Gründen unerwünscht wäre.

Ein weiteres Problem ist auch, dass bei flüssigen oder viskosen Substanzen in diesen kleinen Mengenbereichen die Kapillarkräfte relativ betrachtet hoch werden und selbst mit einem relativ dichten Zylinder die flüssige Substanz die Tendenz hat, zwischen den Kolben und den Zylinder zu steigen. Diese müssten aufwändig abgedichtet werden, was für ein Wegwerfwerkzeug teuer ist und vor allem substanzabhängig ist. Im Weiteren ist es auch schwierig, beim Ausstossen einer flüssigen Substanz alles, was unter der Grösse eines Tropfens der entsprechenden Substanz liegt, abzustossen, also abzugeben.

Weiterer Stand der Technik ist die WO2006/075201A1.

Durch die vorliegende Erfindung soll nun eine Dosiervorrichtung zur Verfügung gestellt werden, die die beschriebenen Nachteile der bekannten Dosiervorrichtungen vermeidet und dabei speziell auch für die Dosierung von Flüssigkeiten und Feststoffen im Milligramm- und Sub-Milligramm-Bereich geeignet ist. Konkreter soll eine kostengünstige Lösung für eine Dosiervorrichtung angegeben werden, die für vielerlei Substanzen, speziell aber für Flüssigkeiten, geeignet ist, auch kleinste Substanzmengen bis hinunter in den Milligramm- und Submilligramm-Bereich mit ausreichender Präzision dosieren kann und mit welcher Kontaminationsprobleme ohne besonderen Aufwand zuverlässig vermieden werden.

Diese der Erfindung zugrunde liegende Aufgaben werden durch die erfindungsgemässe, im unabhängigen Anspruch 1 definierte Vorrichtung zur Dosierung einer Substanz und durch das im unabhängigen Anspruch 17 definierte Verfahren zur Dosierung einer Substanz gelöst. Besonders vorteilhafte Weiterbildungen und Ausgestaltungen der erfindungsgemässen Dosiervorrichtung und des erfindungsgemässen Dosierverfahrens ergeben sich aus den jeweils abhängigen Ansprüchen.

Hinsichtlich der Dosiervorrichtung besteht das Wesen der Erfindung in Folgendem: Eine Vorrichtung zur Dosierung einer Substanz in einen Zielbehälter umfasst ein Dosierwerkzeug zur Aufnahme und Abgabe von Substanz. Das Dosierwerkzeug ist als Haftkörper ausgebildet, an dessen Oberfläche zu dosierende Substanz haften kann.

Die Vorrichtung weist ein Greifwerkzeug auf, mit welchem das Dosierwerkzeug aufnehmbar, haltbar und wieder abgebbar ist. Sie ist dazu ausgebildet, das Dosierwerkzeug mit zu dosierender Substanz zu versehen, so dass diese am Dosierwerkzeug anhaftet, und mittels des Greifwerkzeugs das Dosierwerkzeug mit der anhaftenden Substanz in den Zielbehälter abzugeben oder in den Zielbehälter einzutauchen, bis sich die anhaftende Substanz vom Dosierwerkzeug abgelöst hat. Die Vorrichtung weist ausserdem eine Waage zur Bestimmung der Menge am Dosierwerkzeug anhaftender Substanz und eine Steuerung für die Waage und für das Greifwerkzeug auf.

Durch die Ausbildung des Dosierwerkzeugs als Haftkörper können extrem kleine Substanzmengen dosiert werden. Mittels der Waage kann die am Dosierwerkzeug anhaftende Substanzmenge bestimmt werden. Die Variante des in den Zielbehälter Eintauchens des Dosierwerkzeugs, bis sich die anhaftende Substanz vom Dosierwerkzeug abgelöst hat, kann insbesondere dann vorteilhaft sein, wenn die Substanz in eine Lösung abgeben wird. Beim Eintauchen des Dosierwerkzeugs in die Lösung kann dann nämlich die am Dosierwerkzeug anhaftende Substanz einfach in der Lösung aufgelöst werden.

Vorteilhafterweise ist der Haftkörper als vorzugsweise zylindrischer Stab ausgebildet. Ganz besonders vorteilhaft ist dabei der Haftkörper an seinem nicht zur Halterung durch das Greifwerkzeug vorgesehenen Ende einer Tropfenbildung entgegenwirkend, insbesondere abgerundet oder spitz zulaufend, ausgebildet. Dies ist insbesondere bei grösseren Durchmessern vorteilhaft. Bei sehr kleinen Durchmessern ist das weniger relevant, bzw. automatisch gegeben, da die Haftfläche des Tropfens dann per se klein ist. Der Haftkörper kann vorteilhafterweise auch als Ganzer als spitz zulaufender, insbesondere konischer, Stab ausgebildet sein. Diese vorteilhaften Ausbildungen des Haftkörpers erlauben eine einfache und kostengünstige Herstellung des Haftkörpers, so dass dieser für den Einmal-Gebrauch geeignet ist. Durch die Ausbildung des Dosierwerkzeugs als wegwerfbarer Körper können einerseits Substanzen vieler unterschiedlicher Konsistenzen (speziell Flüssigkeiten, aber auch Pulver, etc.) dosiert werden und wird anderseits das Kontaminationsproblem völlig eliminiert, da das Dosierwerkzeug aufgrund seiner extrem einfachen Konstruktion so kostengünstig herstellbar ist, dass es nach jedem Gebrauch weggeworfen werden kann. Die Grundidee dabei ist, dass ein Teil des Dosierwerkzeugs mit der zu dosierenden Substanz versehen wird, wobei eine kleine Menge der Substanz am Dosierwerkzeug haften bleibt. Das Dosierwerkzeug mit der daran haftenden Substanzmenge wird dann zum Zielgefäss bewegt und in dieses abgegeben bzw. eingetaucht. Dies ist gut kalibrierbar, da unter gleichen Bedingungen mit der gleichen Substanz das Versehen der Oberfläche mit Substanz wiederholbar ist, also innerhalb eines statistischen Fehlerbereichs insbesondere bei gleicher Eintauchtiefe in einen Substanzbehälter mit der zu dosierenden Substanz gleich ist und dies insbesondere bei dünnen zylindrischen Stäbchen bezüglich neuen Eintauchtiefen gut im Voraus zu berechnen ist.

Durch die stabförmige Ausbildung des Haftkörpers kann dieser zur Anhaftung von Substanz (bei Flüssigkeiten Benetzung) in eine in einem Substanzbehälter befindliche zu dosierende Substanz eingetaucht werden, wobei durch Einstellen der Eintauchtiefe die Menge an der am Stab haften bleibenden Substanz gesteuert werden kann.

Vorteilhafterweise weist der Haftkörper an seinem nicht zur Halterung durch das Greifwerkzeug vorgesehenen Ende eine haftungserhöhende Oberflächenstruktur, beispielsweise Rillen, Spitzen, Fortsätze, Poren, Öffnungen oder eine Aufrauhung, auf. Dadurch können auch weniger gut haftende Substanzen am Haftkörper anhaften.

Der Haftkörper kann an seinem nicht zur Halterung durch das Greifwerkzeug vorgesehenen Ende zumindest auch nur so ausgebildet sein, dass er keine substanzabweisende Eigenschaft aufweist.

Der Haftkörper kann vorteilhafterweise auch sphäroidisch, insbesondere kugelförmig, ausgebildet sein. Da Kugeln oder ähnliche Körper oft in anderen Arbeitsschritten einer Formulierung als Werkzeuge eingesetzt werden, z.B. um die Durchmischung bei einem Mischvorgang zu verbessern oder auch um Feststoffe zu zermahlen, ist die Verwendung so geformter Haftkörper für die Zudosierung von Kleinstmengen von Substanzen besonders vorteilhaft.

Vorteilhafterweise weist der Haftkörper einen maximalen Durchmesser im Bereich von 0.1 bis 3 mm, vorzugsweise 0.1 bis 2 mm, noch bevorzugter 0.1 bis 1 mm auf. Dadurch können besonders kleine Substanzmengen mit dem Haftkörper transferiert werden.

Zweckmässigerweise besteht der Haftkörper aus einem chemisch inerten Material, insbesondere Glas, wobei aber auch andere Materialien möglich sind. Der Einsatz solcher chemisch inerter Materialien erlaubt es, das Dosierwerkzeug im Zielgefäss zurückzulassen, ohne dass es dort einen negativen Einfluss auf die dort stattfindenden chemischen Vorgänge hat, zum Teil aber sogar positive Effekte auf physikalische Vorgänge (speziell Mischvorgänge) haben kann.

Der Haftkörper kann vorteilhafterweise auch ferromagnetisch oder elektrostatisch oder elektromagnetisch aufladbar ausgebildet sein. Dies erhöht die Möglichkeiten, an seiner Oberfläche zu dosierende Substanz anzuhaften. Durch gezielte elektrostatische Aufladung des Haftkörpers kann für gewisse pulverförmige Substanzen die Anhaftung auf dem Haftkörper verbessert werden. Die magnetische Aufladung des Haftkörpers lässt ferromagnetische Feststoffe am Haftkörper anhaften. Durch die ferromagnetische Ausbildung kann der Haftkörper (z.B. nach dem Einmischen der Substanz) zudem mittels eines Magneten einfach entweder aus dem Zielbehälter entfernt oder bei der Entleerung des Zielbehälters in diesem zurückgehalten werden.

Vorteilhafterweise ist die Steuerung zur Durchführung der folgenden Schritte ausgebildet:
a) Aufnehmen eines Dosierwerkzeugs mittels des Greifwerkzeugs;
b) Versehen des Dosierwerkzeugs mit zu dosierender Substanz;
c) Bestimmen der am Dosierwerkzeug anhaftenden Menge an Substanz;
d) falls die anhaftende Menge an Substanz grösser als eine Sollmenge ist, Verwerfen des Dosierwerkzeugs und Wiederholen der Schritte a) - d) mit einem neuen Dosierwerkzeug so lange, bis die anhaftende Menge an Substanz kleiner als die Sollmenge ist oder der Sollmenge entspricht;
e) falls die anhaftende Menge an Substanz kleiner als die Sollmenge ist, weiteres Versehen des Dosierwerkzeugs mit zu dosierender Substanz und Wiederholen der Schritte c) - e) so lange, bis die anhaftende Menge an Substanz der Sollmenge entspricht; und
f) wenn die anhaftende Menge an Substanz der Sollmenge entspricht, Positionieren des Dosierwerkzeugs über dem Zielbehälter und Abwerfen des Dosierwerkzeugs mit der anhaftenden Menge an Substanz in den Zielbehälter oder Eintauchen des Dosierwerkzeugs mit der anhaftenden Menge an Substanz in den Zielbehälter, bis sich die anhaftende Substanz vom Dosierwerkzeug abgelöst hat.

Diese Ausbildung der Steuerung erlaubt eine weitestgehend automatische Durchführung des Dosiervorgangs und es kann jeweils vor dem definitiven Dosiervorgang entschieden werden, ob die aufgenommene Substanzmenge der Zielmenge entspricht oder nicht und so kann die Formulierung oder die chemische Reaktion vor einer falschen Rezeptur geschützt werden. Mit diesem Vorgehen kann im Prinzip eine sehr hohe Genauigkeit erreicht werden. Es kann nämlich erreicht werden, dass praktisch immer bis auf den Ablesewert der Waage genau eine Substanzmenge eingewogen werden kann.

Die Waage kann zur Messung des Gewichts eines Substanzbehälters ausgebildet und angeordnet sein, aus dem die zu dosierende Substanz entnehmbar ist. Wenn der Haftkörper durch Eintauchen in den Substanzbehälter und anschliessendes Entnehmen aus diesem mit Substanz versehen wird, kann dadurch die Menge der am Haftkörper anhaftenden Substanz einfach durch Wägen des Substanzbehälters vor und nach dem Eintauchen und Entnehmen des Haftkörpers bestimmt werden.

Vorteilhafterweise ist die Waage zur Messung des Gewichts des vom Greifwerkzeug gehaltenen Dosierwerkzeugs bzw. Haftkörpers ausgebildet und angeordnet. Durch Wägen des Haftkörpers vor und nach dem Versehen mit Substanz kann damit einfach die Menge der am Haftkörper anhaftenden Substanz bestimmt werden.

Mit Vorteil ist die Vorrichtung mit einer Waage am Dosierwerkzeug und zur Kontrolle einer Waage unter dem Zielbehälter ausgerüstet.

Vorteilhafterweise ist die Vorrichtung mit einer mit der Steuerung zusammenarbeitenden Heb- und Senkeinrichtung ausgestattet, mittels welcher das Greifwerkzeug heb- und senkbar ist. Auf diese Weise kann das Dosierwerkzeug bzw. der Haftkörper einfach in einen Substanzbehälter eingetaucht und wieder aus diesem entnommen werden. Durch die Heb- und Senkvorrichtung ist eine feinfühligere Bewegung des Greifwerkzeugs mit dem Dosierwerkzeug möglich als durch Bewegung der gesamten Vorrichtung.

Vorteilhafterweise ist die Vorrichtung mit einem mit der Steuerung zusammenarbeitenden Roboterarm ausgestattet, an welchem das Greifwerkzeug befestigt ist, wobei das Greifwerkzeug mittels des Roboterarms vorzugsweise in allen drei Raumrichtungen sowie um eine vertikale Rotationsachse bewegbar ist. Dies erlaubt eine einfache Durchführung aller für einen Dosiervorgang erforderlichen Bewegungsabläufe der Vorrichtung.

Durch die Drehbarkeit des Greifwerkzeugs um eine (in normaler Betriebsposition) vertikale Rotationsachse kann das Dosierwerkzeug während des Eintauchens bzw. Einstechens in eine im Substanzbehälter befindliche Substanz und vorzugsweise auch während des Herausziehens aus der Substanz um seine (vertikale) Längsachse gedreht werden. Die Drehbewegung erleichtert das Einstechen im Falle von Substanzen mit relativ fester Konsistenz. Ausserdem verhindert sie ein Festsetzen des Dosierwerkzeugs in der Substanz.

Vorteilhafterweise ist die Vorrichtung mit einem Aufnahmegestell für eine Anzahl von mehreren gleichen oder mehreren zumindest teilweise unterschiedlichen Dosierwerkzeugen oder mit mindestens einem Dispenser für Dosierwerkzeuge ausgestattet. Auf diese Weise kann das für die jeweilige Dosieraufgabe bzw. zu dosierende Substanz bzw. Substanzmenge am besten geeignete Dosierwerkzeug ausgewählt werden.

Zweckmässigerweise kann die Vorrichtung auch ein Dispensierwerkzeug zum (direkten) Versehen des Dosierwerkzeugs mit zu dosierender Substanz aufweisen. Dadurch braucht das Dosierwerkzeug zum Versehen mit Substanz nicht in einen Substanzbehälter eingetaucht zu werden.

Hinsichtlich des Dosierverfahrens besteht das Wesen der Erfindung in Folgendem: Ein Verfahren zum Dosieren einer Substanz unter Verwendung der erfindungsgemässen Vorrichtung umfasst die folgenden Schritte:
a) Aufnehmen eines als Haftkörper ausgebildeten Dosierwerkzeugs mittels des Greifwerkzeugs;
b) Versehen des Dosierwerkzeugs mit zu dosierender Substanz;
c) Bestimmen der am Dosierwerkzeug anhaftenden Menge an Substanz;
d) falls die anhaftende Menge an Substanz grösser als eine Sollmenge ist, Verwerfen des Dosierwerkzeugs und Wiederholen der Schritte a) - d) mit einem neuen Dosierwerkzeug so lange, bis die anhaftende Menge an Substanz kleiner als die Sollmenge ist oder der Sollmenge entspricht;
e) falls die anhaftende Menge an Substanz kleiner als die Sollmenge ist, weiteres Versehen des Dosierwerkzeugs mit zu dosierender Substanz und Wiederholen der Schritte c) - e) so lange, bis die anhaftende Menge an Substanz der Sollmenge entspricht; und
f) wenn die anhaftende Menge an Substanz der Sollmenge entspricht, Positionieren des Dosierwerkzeugs über dem Zielbehälter und Abwerfen des Dosierwerkzeugs mit der anhaftenden Menge an Substanz in den Zielbehälter oder Eintauchen des Dosierwerkzeugs mit der anhaftenden Menge an Substanz in den Zielbehälter, bis sich die anhaftende Substanz vom Dosierwerkzeug abgelöst hat.

Durch dieses Verfahren lassen sich unterschiedlichste Substanzen in kleinsten Mengen hochpräzis in einen Zielbehälter dosieren, wobei Kontaminationsprobleme zur Gänze vermieden werden.

Bei den Schritten d) und e) wird vorzugsweise die Differenz der am Dosierwerkzeug anhaftenden Menge an Substanz zu der Sollmenge bestimmt und abhängig davon das Versehen des Dosierwerkzeugs mit zu dosierender Substanz angepasst, insbesondere mittels einer Steuerung.

Vorteilhafterweise umfasst das Versehen des Dosierwerkzeugs mit zu dosierender Substanz folgende Schritte:
b1) Positionieren des Dosierwerkzeugs über einem Substanzbehälter;
b2) Absenken des Dosierwerkzeugs zum Eintauchen bzw. Einstechen des Dosierwerkzeugs in eine im Substanzbehälter befindliche Substanz und dadurch Versehen des Dosierwerkzeugs mit Substanz und
b3) Anheben des Dosierwerkzeugs aus dem Substanzbehälter.

Mit dieser Ausführungsform des Verfahrens erfolgt das Versehen des Dosierwerkzeugs mit zu dosierender Substanz auf einfache und praktische Weise durch Eintauchen des Dosierwerkzeugs in die zu dosierende Substanz.

Alternativ umfasst das Versehen des Dosierwerkzeugs mit zu dosierender Substanz folgende Schritte:
b1) Positionieren des Dosierwerkzeugs unter einem Dispensierwerkzeug und
b2) Auftragen von Substanz auf das Dosierwerkzeug mittels des Dispensierwerkzeugs.

Bei dieser Verfahrensvariante wird das Dosierwerkzeug direkt benetzt, so dass auf das Eintauchen in die Substanz verzichtet werden kann.

Gemäss einer weiteren vorteilhaften Ausführungsform wird das Dosierwerkzeug zuerst mit einer flüssigen Haftsubstanz benetzt und anschliessend mit der zu dosierenden

Substanz versehen. Dies ist insbesondere vorteilhaft für die Dosierung von pulverförmigen Substanzen, die kaum an Oberflächen haften. Als flüssige Haftsubstanz wird dabei mit Vorteil eine Flüssigkeit eingesetzt, die entweder im Zielbehälter ohnehin schon vorhanden ist oder später erst zugesetzt wird. Die Benetzung mit der flüssigen Haftsubstanz und das Versehen mit der zu dosierenden, beispielsweise pulverförmigen, Substanz kann z.B. durch Eintauchen des Dosierwerkzeugs in die betreffenden Substanzen erfolgen.

Vorteilhafterweise wird in einem Aufnahmegestell eine Anzahl von mehreren gleichen oder zumindest teilweise unterschiedlichen Dosierwerkzeugen bereitgestellt und das vom Greifwerkzeug aufzunehmende Dosierwerkzeug aus diesen bereitgestellten Dosierwerkzeugen ausgewählt. Auf diese Weise kann das für die jeweilige Dosieraufgabe bzw. zu dosierende Substanz bzw. Substanzmenge am besten geeignete Dosierwerkzeug eingesetzt werden. Ferner können auf diese Weise durch entsprechende Auswahl der Dosierwerkzeuge verschiedene Dosiermengen von einigen hundert mg bis weit hinunter in den Sub-Milligramm-Bereich erreicht werden.

Vorteilhafterweise erfolgt die Aufnahme des Dosierwerkzeugs durch ein Greifwerkzeug mit öffen- und schliessbaren Greifbacken.

In einer weiteren vorteilshaften Ausführung kann das Dosierwerkzeug (durch entsprechende Ausbildung des Greifwerkzeugs) mittels eines Unterdruckes (Vakuum) aufgenommen und gehalten werden. Dies ist zum Beispiel beim Einsatz von kugelförmigen Dosierwerkzeugen bzw. Haftkörpern besonders vorteilhaft.

Gemäss einer weiteren vorteilshaften Ausführung kann das Dosierwerkzeug (durch entsprechende Ausbildung des Greifwerkzeugs) elektromagnetisch aufgenommen und gehalten werden. Dies ist zum Beispiel beim Einsatz von ferromagnetischen Dosierwerkzeugen vorteilhaft.

Gemäss einer weiteren vorteilhaften Ausführungsform wird die Dosierung in einzelnen Teildosierungen durchgeführt, wobei, vorzugsweise unter der Kontrolle einer Waage, eine schrittweise Annäherung an eine geforderte Soll-Dosiermenge erfolgt. Auf diese Weise ist eine besonders präzise Dosierung möglich.

Gemäss einer weiteren vorteilhaften Ausführungsform wird die tatsächliche Menge der in den Zielbehälter insgesamt dosierten Substanz mittels einer (weiteren) Waage gemessen.

Die erfindungsgemässe Vorrichtung kann auch zu einer sogenannten komplementären Dosierung eingesetzt werden: Falls eine grössere Menge einer Substanz sehr genau dosiert werden muss, kann mit einem herkömmlichen Dosierwerkzeug z.B. 99% der Substanz dosiert werden und dann mit dem hier beschriebenen Prinzip die Differenz zum möglichst exakten Wert dosiert werden.

Im Folgenden wird die Erfindung anhand von in den Zeichnungen dargestellten Ausführungsbeispielen detaillierter beschrieben. Es zeigen:
- Fig. 1-6 -: je eine schematische Darstellung eines ersten Ausführungsbeispiels der erfindungsgemässen Dosiervorrichtung in sechs charakteristischen Phasen eines Dosiervorgangs;
- Fig. 7 -: eine schematische Darstellung eines zweiten Ausführungsbeispiels der erfindungsgemässen Dosiervorrichtung;
- Fig. 8-9 -: je eine schematische Darstellung von zwei Varianten der Dosiervorrichtung gemäss Fig. 7;
- Fig. 10-17 -: verschiedene Varianten von in der Dosiervorrichtung eingesetzten Dosierwerkzeugen;
- Fig. 18 -: einen Zielbehälter mit mehreren darin befindlichen Dosierwerkzeugen und
- Fig. 19-20 -: zwei Skizzen zur Erläuterung der Separierung von in einem Zielbehälter befindlichen Dosierwerkzeugen von einem im Zielbehälter befindlichen Produkt.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

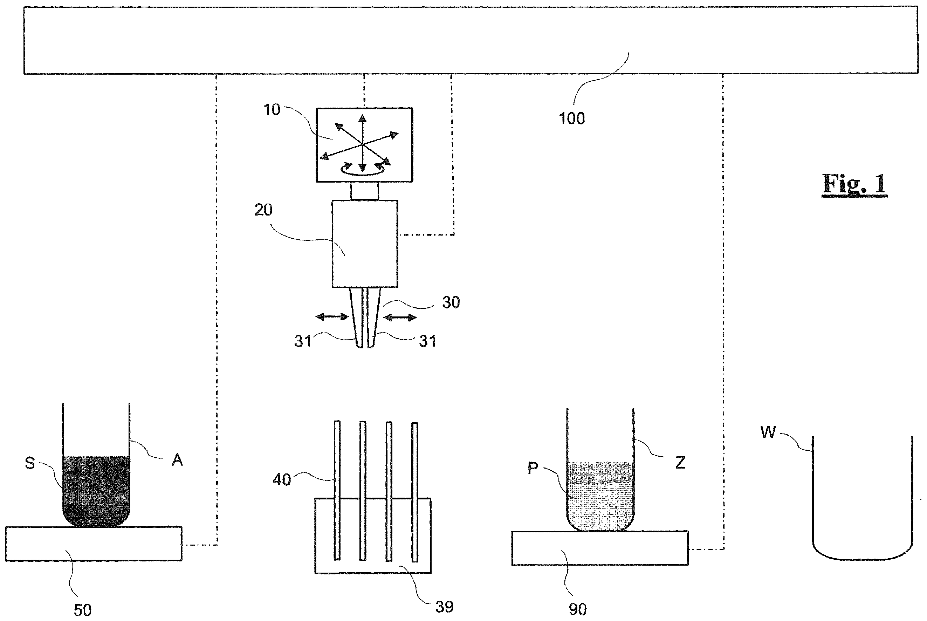

Die in den Figuren 1-6 dargestellte erste Ausführungsform der Dosiervorrichtung umfasst einen Werkzeugkopf 20, der an einem nur symbolisch durch einen Kasten angedeuteten Roboterarm 10 lösbar montiert ist. Zur Steuerung der Bewegung des Roboterarms 10 ist eine Steuerung (Steuerelektronik) 100 vorgesehen. Mittels des Roboterarms 10 kann der Werkzeugkopf 20 in alle drei Raumrichtungen innerhalb der Reichweite des Roboterarms bewegt und um eine (in normaler Betriebsposition der Vorrichtung) vertikale Achse rotiert werden.

Der Werkzeugkopf 20 ist mit einem Greifwerkzeug 30 ausgestattet, welches hier im Beispiel mit gegeneinander verschiebbaren Greiferbacken 31 zum Greifen, Halten und Loslassen eines Dosierwerkzeugs 40 versehen ist. Das Greifwerkzeug 30 bzw. die Offen- und Schliessbewegung der Greifbacken 31 ist ebenfalls von der Steuerung 100 gesteuert. Das Greifwerkzeug 30 kann auch anders ausgebildet sein. Beispielsweise kann es zur Festhaltung des Dosierwerkzeugs mittels Unterdruck (Vakuum) oder zur Festhaltung des Dosierwerkzeugs auf elektromagnetischer Basis ausgebildet sein. In letzterem Falle müsste das Dosierwerkzeug natürlich entsprechend ferromagnetisch ausgebildet sein.

Weiter ist die Vorrichtung mit einer Waage 50 ausgerüstet, auf der ein eine zu dosierende Substanz S enthaltender Substanzbehälter A abgestellt ist. Bei der Waage 50 handelt es sich vorteilhafterweise um eine Analysenwaage, deren Auflösung und Genauigkeit mindestens etwa 0.1 mg bis 0.01 mg, vorzugsweise sogar etwa bis 0.001 mg oder noch genauer ist.

Ferner umfasst die Vorrichtung eine weitere Waage 90, auf der ein Zielbehälter Z abgestellt ist, in welchen eine dosierte Menge der zu dosierenden Substanz S eingebracht werden soll. Beim Zielbehälter Z handelt es sich vielfach um einen Behälter, in den während der Herstellung eines Produkts P (z.B. einer Farbmischung) mehrere Substanzen zudosiert werden. Die Waage 90 ist vorteilhafterweise ebenfalls eine Analysenwaage, deren Auflösung und Genauigkeit mindestens etwa 0.1 mg bis 0.01 mg, vorzugsweise sogar etwa bis 0.001 mg oder noch genauer ist.

Die beiden Waagen 50 und 90 arbeiten mit der Steuerung 100 in dem Sinne zusammen, dass die Steuerung die mit den Waagen durchzuführenden Wägungen auslöst und die Messresultate ausliest und verwertet.

Die Figuren 1-6 zeigen noch einen Abfallbehälter W zur Aufnahme von verworfenen Dosierwerkzeugen 40 sowie ein Aufnahmegestell (Rack) 39, in welchem eine Anzahl von Dosierwerkzeugen 40 bereitgestellt sind. Darauf wird weiter unten noch näher eingegangen.

Die eigentliche Substanzdosierung, also die Aufnahme von zu dosierender Substanz aus dem Substanzbehälter A und die Abgabe einer dosierten Substanzmenge in den Zielbehälter Z, erfolgt mittels des Dosierwerkzeugs 40, welches gemäss einem Hauptgedanken der Erfindung als Haftkörper ausgebildet ist, an dessen Oberfläche eine kleine Substanzmenge anhaften kann. Unter Haftkörper ist im vorliegenden Zusammenhang ein Körper beliebiger Gestalt zu verstehen, an dem Substanz nur an der Oberfläche des Körpers anhaftet.

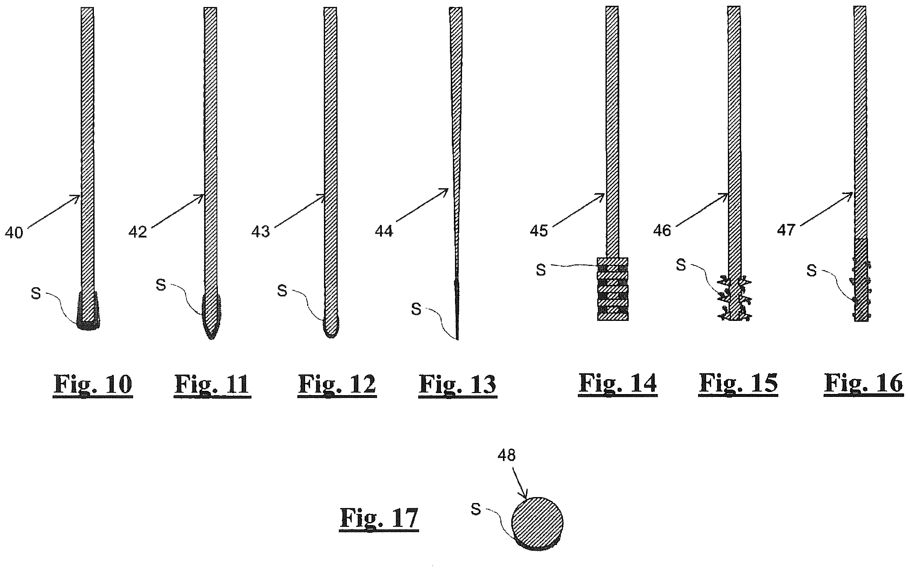

Im Ausführungsbeispiel der Figuren 1-6 ist das Dosierwerkzeug bzw. der Haftkörper 40 als dünner zylindrischer Glasstab ausgebildet. Weitere Ausbildungsformen des Haftkörpers sind weiter unten insbesondere im Zusammenhang mit den Figuren 10-17 erläutert.

Das Dosierwerkzeug bzw. der Haftkörper 40 kann grundsätzlich auch aus einem anderen Material als Glas, z.B. aus Kunststoff oder Metall, gebildet sein. Glas ist jedoch praktisch in allen Fällen chemisch inert und daher vorteilhaft.

Im Folgenden wird die Funktionsweise des in den Figuren 1-6 dargestellten Ausführungsbeispiels der erfindungsgemässen Dosiervorrichtung beschrieben.

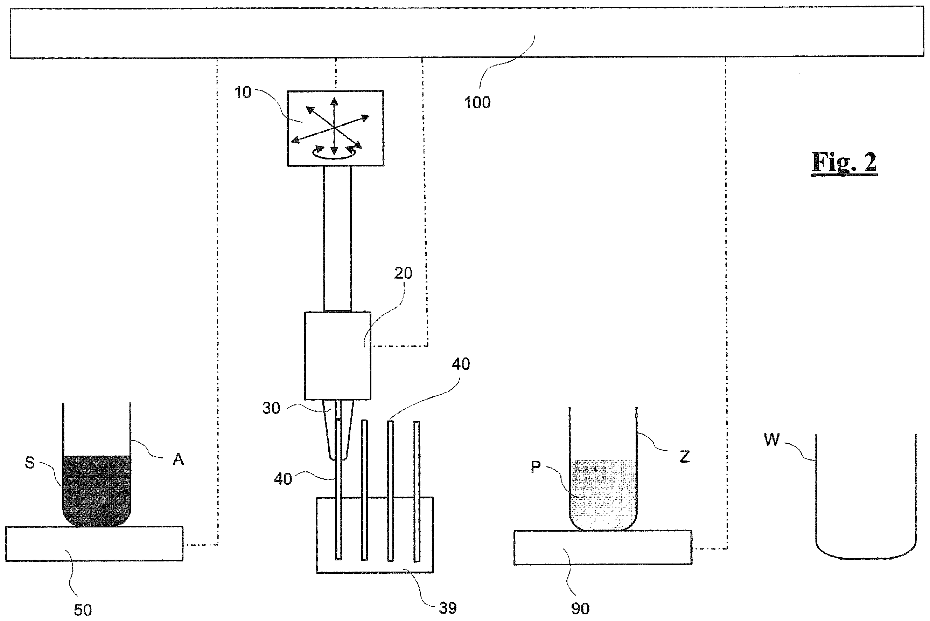

In dem in Fig.1 dargestellten Ausgangszustand der Dosiervorrichtung befindet sich noch kein Dosierwerkzeug 40 im Greifwerkzeug 30. Eine Anzahl von Dosierwerkzeugen 40 ist im Aufnahmegestell (Rack) 39 vorrätig gehalten. Mittels des Roboterarms 10 wird der Werkzeugkopf 20 mit dem Greifwerkzeug 30 an das Aufnahmegestell 39 herangefahren und das Greifwerkzeug 30 erfasst ein Dosierwerkzeug 40 und hält es fest (Fig.2). Selbstverständlich könnte umgekehrt auch das Aufnahmegestell 39 mittels einer anderen Transportvorrichtung an den Werkzeugkopf 20 herangefahren und dann wieder weggefahren werden.

Das Dosierwerkzeug 40 wird dann durch Verstellen des Roboterarms 10 aus dem Aufnahmegestell 39 entnommen und zu einem auf der Waage 50 bereitgestellten Substanzbehälter A bewegt. Vor dem Eintauchen des Dosierwerkzeugs 40 in den Substanzbehälter A wird mittels der Waage 50 das Gesamtgewicht M₀ des Substanzbehälters A inklusive der aktuell darin enthaltenen Substanz S gemessen.

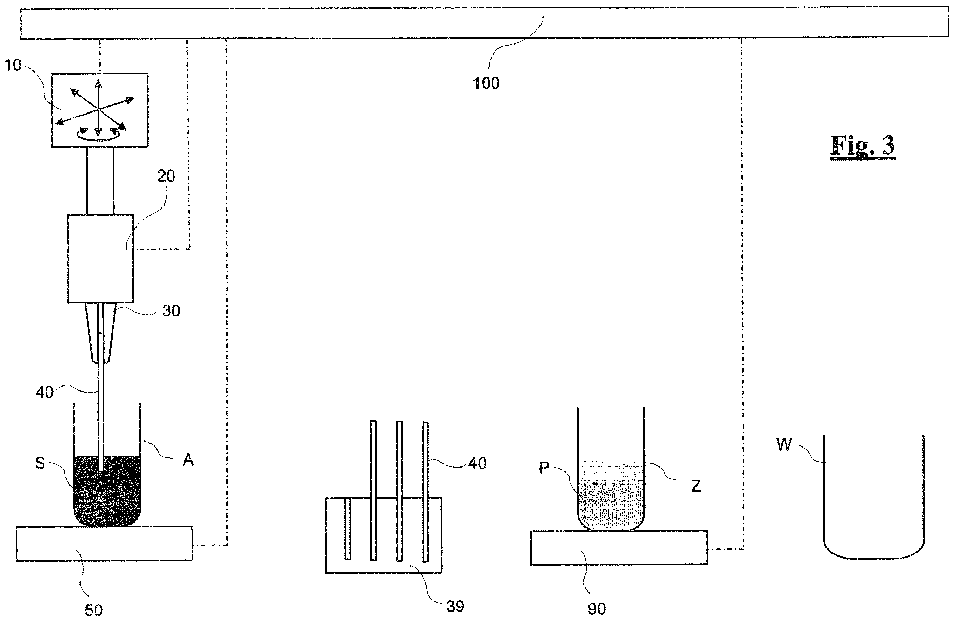

Nun wird das Dosierwerkzeug 40 mittels des Roboterarms 10 soweit abgesenkt, bis das Dosierwerkzeugs 40 in die Substanz S eintaucht bzw., je nach Konsistenz der Substanz, einsticht (Fig. 3). Dabei wird die eingetauchte Oberfläche des Glasstabs bzw. des Dosierwerkzeugs 40 mit Substanz S benetzt.

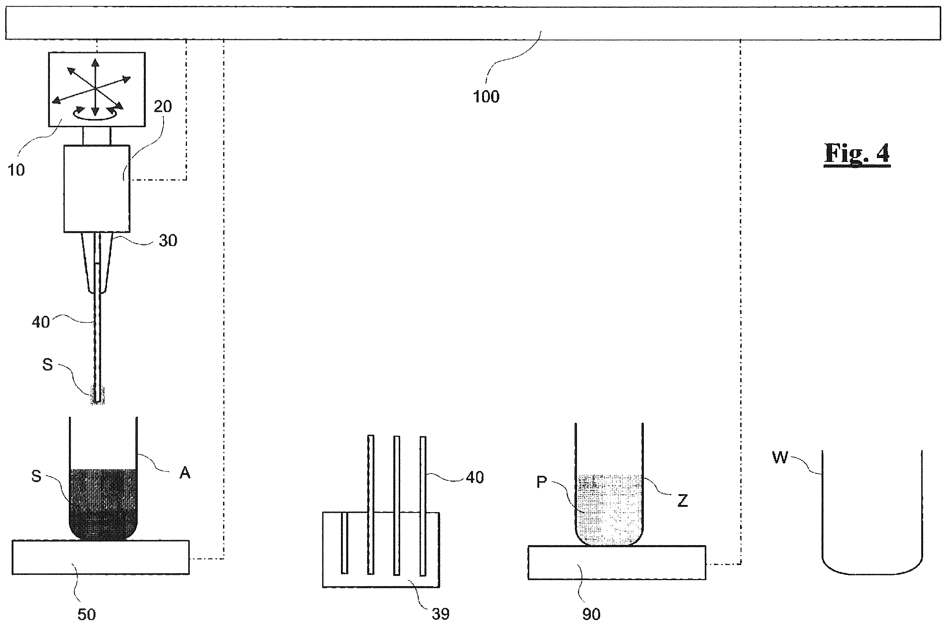

Daraufhin wird das Dosierwerkzeug 40 mittels des Roboterarms 10 über den Rand des Substanzbehälters A angehoben. Während einer kurzen Wartezeit lässt man im Falle von Tropfenbildung überschüssige Substanz bzw. nicht anhaftende Substanz in den Substanzbehälter A zurücktropfen. Mit der Waage 50 wird jetzt eine erneute Gewichtsmessung vorgenommen und somit durch Subtraktion des jetzt gemessenen Gewichts M₁ von dem vor der Substanzaufnahme gemessenen Gewicht M₀ die Menge (Gewicht) M_{S} der auf diese Weise vom Dosierwerkzeug 40 aufgenommenen Substanz S gemessen (Fig. 4).

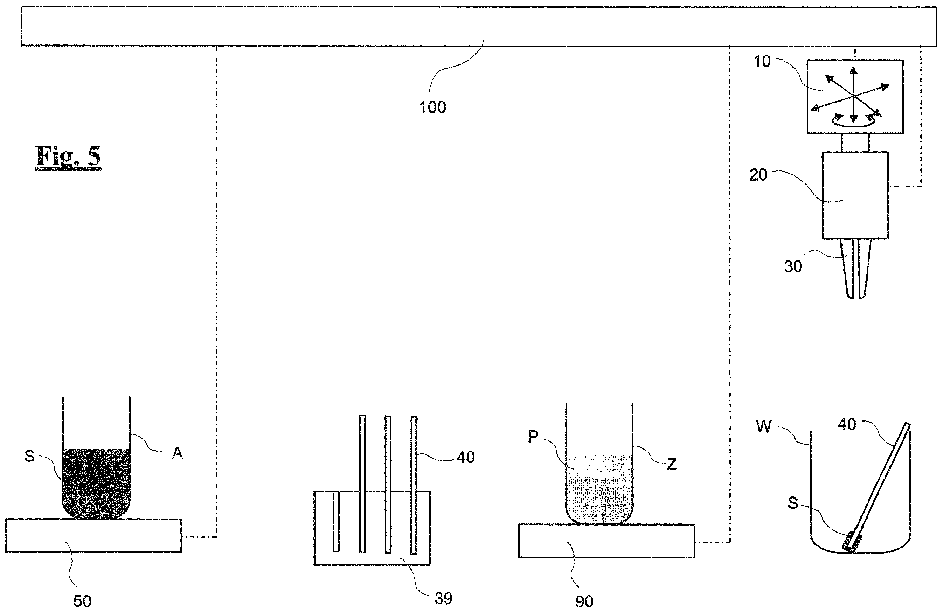

In der Steuerung 100 ist eine für den jeweiligen Dosiervorgang vorbestimmte Sollmenge (Ziel-Dosiermenge) M_{Z} abgespeichert. Falls die aufgenommene, d.h. am Dosierwerkzeug 40 anhaftende Substanzmenge M_{S} grösser ist als die vorbestimmte Soll- bzw. Ziel-Dosiermenge M_{Z}, wird das Dosierwerkzeug 40 mittels des Roboterarms 10 zum Abfallbehälter W gebracht und dort durch Öffnen des Greifwerkzeugs 30 verworfen (Fig. 5). Anschliessend wird analog Fig. 2 ein neues Dosierwerkzeug 40 aus dem Rack 39 geholt und der Eintauchvorgang analog Fig. 3 wiederholt, dieses Mal aber mit einer geringeren Eintauchtiefe. Diese Eintauchtiefe kann die Steuerung 100 unter Bezugnahme der beim ersten Aufnahmevorgang erhaltenen Messresultate entsprechend anpassen, um beim zweiten Versuch nun die genau gewünschte Solldosiermenge aufzunehmen. Falls die aufgenommene Substanzmenge immer noch grösser ist als die Ziel-Dosiermenge, wird der Vorgang jeweils mit einem neuen Dosierwerkzeug so lange wiederholt, bis die aufgenommene Substanzmenge mit ausreichender Genauigkeit mit der gewünschten Soll- bzw. Ziel-Dosiermenge übereinstimmt.

Umgekehrt wird, falls die aufgenommene Substanzmenge zu gering ist, mit demselben Dosierwerkzeug 40 analog Fig. 3 noch einmal in den Substanzbehälter A eingetaucht, dieses Mal aber mit einer durch die Steuerung errechneten grösseren Eintauchtiefe. Dieses Trimmen der aufgenommenen Substanzmenge kann auch in mehreren Schritten iterativ erfolgen (Feedback-Loop).

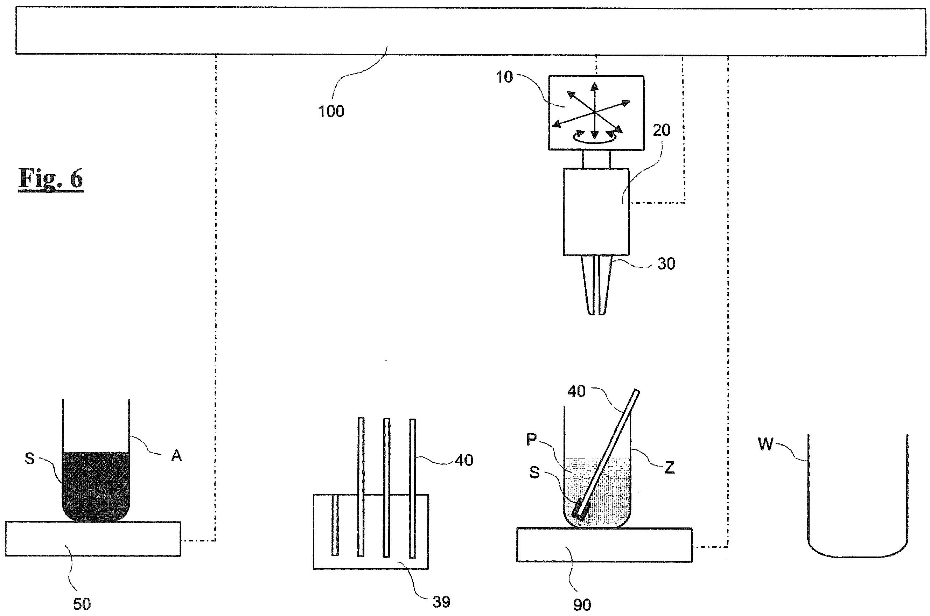

Wenn die gewünschte Zielmenge M_{Z} aufgenommen ist, die aufgenommene Substanzmenge also mit der gewünschten Ziel-Dosiermenge übereinstimmt, wird das Greifwerkzeug 30 mit dem in diesem gehalterten Dosierwerkzeug 40 mittels des Roboterarms 10 über den auf der Waage 90 bereitgestellten Zielbehälter Z gefahren, in welchen die Substanz S zudosiert werden soll. Anschliessend wird durch Öffnen des Greifers 30 das Dosierwerkzeugs 40 mit der an ihm anhaftenden Substanzmenge S in den Zielbehälter Z fallen gelassen (Fig. 6).

Falls eine weitere Substanz zum im Zielbehälter Z enthaltenen Produkt P zudosiert werden soll, wird wieder ein neues Dosierwerkzeug 40 aus dem Aufnahmegestell 39 aufgenommen, und die Dosierung der weiteren Substanz erfolgt wieder gemäss dem vorstehend anhand der Fig. 1-6 beschriebenen Verfahrensablauf (Eintauchen, Trimmen, Abwerfen).

Mittels der Waage 90 kann die tatsächlich in den Zielbehälter Z zudosierte Substanzmenge kontrolliert werden (sofern das Gewicht der jeweiligen Dosierwerkzeuge 40 bekannt ist).

Am Ende jedes Dosiervorgangs wird das zuvor benutzte Dosierwerkzeug verworfen, also nicht mehr verwendet. Dadurch werden Kontaminationsprobleme mit grösstmöglicher Sicherheit vermieden. Die erfindungsgemässe Dosiervorrichtung ermöglicht dieses Konzept durch den Einsatz der speziell ausgebildeten Dosierwerkzeuge, die als einzige Teile der gesamten Dosiervorrichtung mit den zu dosierenden Substanzen in Berührung kommen. Die Dosierwerkzeuge 40 bestehen nur aus einer einzigen, konstruktiv extrem einfachen Komponente (z.B. Glasstab), die einfach und kostengünstig als Massenartikel herstellbar ist, so dass ihr Einsatz als Wegwerfteil wirtschaftlich vertretbar ist.

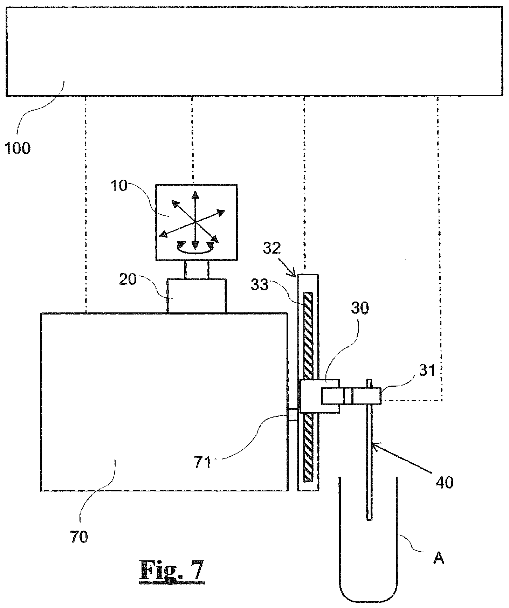

Die Fig. 7 zeigt eine zweite Ausführungsform der erfindungsgemässen Dosiervorrichtung, wobei nur die für das Verständnis erforderlichen Komponenten dargestellt sind. Alle übrigen Komponenten sind gleich wie beim Ausführungsbeispiel gemäss den Figuren 1-6.

Der Werkzeugkopf 20 trägt hier eine Waage 70, an deren Waagebalken 71 eine Heb-und Senkeinrichtung 32 befestigt ist, welche von der Steuerung 100 gesteuert ist. Das Greifwerkzeug 30 mit seinen Greifbacken 31 ist an der Heb- und Senkeinrichtung 32 montiert und kann von dieser über eine motorisch antreibbare Spindel 33 vertikal bewegt, d.h. angehoben bzw. abgesenkt werden. Die Waage 70 misst das Gesamtgewicht von Heb- und Senkeinrichtung 32, Greifwerkzeug 30 und in diesem gehaltertem Dosierwerkzeug 40 mit bzw. ohne daran anhaftender Substanzmenge.

Die Funktionsweise dieses Ausführungsbeispiels der Dosiervorrichtung ist weitestgehend gleich wie beim Ausführungsbeispiel der Figuren 1-6. Der einzige Unterschied besteht darin, dass das Absenken und Anheben des Dosierwerkzeugs 40 z.B. zwecks Aufnahme von Substanz aus dem Substanzbehälter A mittels der Heb- und Senkeinrichtung 32 (und nicht durch den Roboterarm 10) erfolgt. Die Bestimmung der vom Dosierwerkzeug 40 aufgenommenen Substanzmenge erfolgt durch Wägen der von der Waage getragenen Teile vor und nach der Substanzaufnahme. Da das Gewicht der Heb- und Senkeinrichtung 32 und des Greifwerkzeugs 30 systemkonstant sind, entspricht dies dem Wägen des Dosierwerkzeugs 40 vor und nach der Substanzaufnahme.

Diese Ausführungsform der Dosiervorrichtung ist besonders dann vorteilhaft, wenn sehr viele unterschiedliche Substanzbehälter A verwendet werden müssen (deren jeweiliges Platzieren auf einer untenliegenden Waage 50 sehr zeitintensiv wäre) oder wenn die zu dosierende Substanzmenge relativ gross ist (zwei bis mehrstelliger Milligramm-Bereich), so dass die erforderliche Messgenauigkeit der Waage 70 relativ gering (max. Genauigkeit 0.1-1 mg) gehalten werden kann, was die Verwendung kostengünstigerer Waagen erlaubt. Die Heb-und Senkeinrichtung 32 ermöglicht es, das im Greifwerkzeug 30 gehaltene Dosierwerkzeug 40 vertikal zu bewegen, ohne dass dabei der Werkzeugkopf 20 selbst mit der daran angebrachten, oftmals erschütterungsempfindlichen Waage 70 bewegt werden müsste.

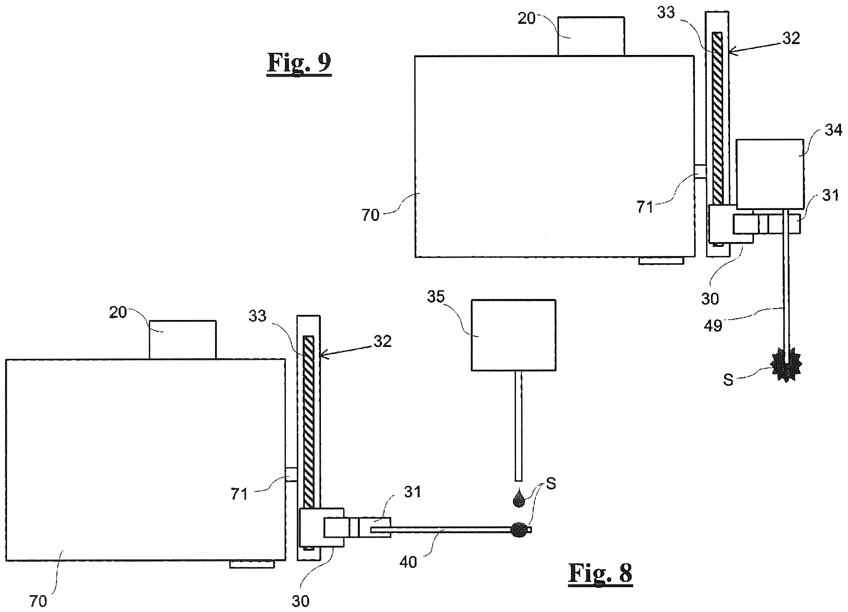

Anstatt das Dosierwerkzeug 40 zwecks Substanzaufnahme in einen Substanzbehälter einzutauchen, ist gemäss einer weiteren, in Fig. 8 vereinfacht dargestellten Ausbildungsform der Dosiervorrichtung auch eine direkte Benetzung des Dosierwerkzeugs 40 möglich. Die analog dem Ausführungsbeispiel der Fig. 7 ausgebildete Dosiervorrichtung ist dazu zusätzlich mit einem Dispensierwerkzeug 35 ausgestattet, welches zum Dispensieren der zu dosierenden Substanz geeignet ist. Beispielsweise kann das Dispensierwerkzeug 35 ein Pulverdosierer oder ein Flüssigkeitsdosierer sein. Das Dosierwerkzeug 40 wird zwecks Substanzaufnahme mittels des Roboterarms und der Heb- und Senkeinrichtung 32 unter das Dispensierwerkzeug 35 gefahren, so wie dies in Fig. 8 dargestellt ist. Mittels des Dispensierwerkzeugs 35 wird dann das Dosierwerkzeug 40 direkt mit der Substanz S versehen, wobei wieder eine gewisse Substanzmenge am Dosierwerkzeug 40 haften bleibt. Nach dem Dispensierschritt kann mittels der am Werkzeugkopf 20 montierten Waage 70 genau gemessen werden, wieviel Substanz S auf dem Dosierwerkzeug 40 anhaftet, und natürlich kann bei Unterdosierung noch mehr Substanz dazugegeben oder aber bei Überdosierung wie vorgängig im Zusammenhang mit den Figuren 1-6 beschrieben das Dosierwerkzeug 40 verworfen und der ganze Vorgang wiederholt werden.

Die Figuren 10-17 zeigen verschiedene Ausbildungsformen von Dosierwerkzeugen, deren unterschiedlichen Formen, Strukturen und Oberflächenbeschaffenheiten den Einsatz mit einer Vielzahl von Substanzen mit unterschiedlichen physikalischen Eigenschaften erlauben. An den Dosierwerkzeugen anhaftende, zu dosierende Substanz S bildet auf dem Dosierwerkzeug eine Art Film, der in den Figuren als dunkelgraue Fläche dargestellt ist.

Die Fig. 10 zeigt die einfachste Form eines Dosierwerkzeugs als zylindrischer Stab 40. Je nach Beschaffenheit der zu dosierenden Substanz (Flüssigkeit) S kann der Film sich am unteren, nicht zur Halterung im Greifwerkzeug 30 bestimmten Zylinderende als Tropfen sammeln.

Um einer Tropfenbildung entgegenzuwirken, kann der zylindrische Stab gemäss den Figuren 11 und 12 an seinem nicht zur Halterung im Greifwerkzeug vorgesehenen unteren Ende spitz, insbesondere konisch, zulaufend ausgebildet sein oder eine Abrundung aufweisen. Die so ausgebildeten Dosierwerkzeuge sind mit 42 bzw. 43 bezeichnet. Die Vermeidung von Tropfenbildung lässt die Aufnahme einer noch geringeren Menge an Flüssigkeit zu und verringert zudem die Gefahr, dass ein sich an der Spitze sammelnder Tropfen vorzeitig abfällt.

Die Fig. 13 zeigt ein als Ganzes als insbesondere konische Spitze ausgebildetes Dosierwerkzeug 44, welches die Aufnahme kleinster Flüssigkeitsmengen erlaubt.

Das in Fig. 14 dargestellte Dosierwerkzeug 45 ist besonders für sehr oberflächenaktive flüssige Substanzen, die an glatten Oberflächen kaum haften, geeignet. Es ist an seinem nicht zur Halterung im Greifwerkzeug vorgesehenen unteren Ende mit Rillen oder Abstufungen versehen, wobei die Anhaftung der Substanz aufgrund der in den Rillen bzw. Abstufungen auftretenden Kapillarkräfte verbessert wird.

In Fig. 15 ist ein Dosierwerkzeug 46 dargestellt, das an seinem nicht zur Halterung im Greifwerkzeug vorgesehenen unteren Ende mit Oberflächenstrukturen in Form von Stacheln und Fortsätzen versehen ist, die z.B. auch partikuläre Feststoffe, aber auch Flüssigkeiten anhaften lassen können. Alternativ ist das in Fig. 16 dargestellte Dosierwerkzeug 47 an seinem nicht zur Halterung im Greifwerkzeug vorgesehenen unteren Ende einfach mit einer rauen Oberfläche versehen (dunkel schraffierter Bereich), an der Flüssigkeiten und Partikel besser haften.

Im Hinblick auf die Aufnahme extrem kleiner Substanzmengen weisen die im Wesentlichen zylindrischen Dosierwerkzeuge 40-43 und 45-47 zweckmässigerweise einen Durchmesser im Bereich von 0.1 bis 3 mm, vorzugsweise 0.1 bis 2 mm, noch bevorzugter 0.1 bis 1 mm auf. Beim konischen Dosierwerkzeug 44 bezieht sich diese Massangabe auf das obere, zur Halterung im Greifwerkzeug vorgesehene Ende des Dosierwerkzeugs.

Fig. 17 schliesslich zeigt ein kugelförmig ausgebildetes Dosierwerkzeug 48. Diese Form des Dosierwerkzeugs ist insbesondere in denjenigen Einsatzfällen vorteilhaft, wo im Zielbehälter Misch- und/oder Mahlvorgänge erforderlich sind. Die mit der dosierten Substanzmenge beladenen, in den Zielbehälter eingebrachten kugelförmigen Dosierwerkzeuge können dann zusätzlich auch für diese Misch- und/oder Mahlvorgänge genutzt werden.

Die in den Figuren 10-17 gezeigten Ausgestaltungen der Dosierwerkzeuge sind rein beispielsweise zu verstehen. Im Rahmen der vorliegenden Erfindung sind selbstverständlich auch beliebige andere Ausbildungsformen möglich.

Der bzw. die Dosierkörper können auch hinsichtlich des Materials, aus welchem sie bestehen, unterschiedlich ausgebildet sein. Aus Kostengründen und weil es praktisch in allen Fällen inert ist, bietet sich in erster Linie Glas an.

Das Dosierwerkzeug kann aber z.B. auch metallisch ausgebildet sein. Dies erlaubt die elektrostatische Aufladung des im Greifwerkzeug gehaltenen Dosierwerkzeugs, so dass es elektrostatisch anhaftende Substanzen aufnehmen kann.

In Fig. 9 ist eine Variante der erfindungsgemässen Dosiervorrichtung dargestellt, welche im Wesentlichen der Variante gemäss Fig. 7 entspricht, zusätzlich aber noch eine elektrostatische Aufladungseinrichtung 34 aufweist, welche bei Aktivierung ein elektrostatisch aufladbar ausgebildetes (metallisches) Dosierwerkzeug 49 elektrostatisch auflädt, was wiederum erlaubt, auch entsprechend geeignete Substanzen S in Form von Pulvern und Granulaten aufzunehmen und zu transferieren.

In einer nicht dargestellten weiteren, zur Ausführungsform der Fig. 9 im Wesentlichen baugleichen Variante der erfindungsgemässen Dosiervorrichtung ist anstelle der elektrostatischen Aufladungseinrichtung 34 eine elektromagnetische Magnetisierungseinrichtung vorgesehen, mittels welcher ein im Greifwerkzeug 30 gehaltenes Dosierwerkzeug aus ferromagnetischem Material magnetisch aufgeladen werden kann, so dass es ein Magnetfeld aufbaut und damit ferromagnetische Substanzen aufnimmt.

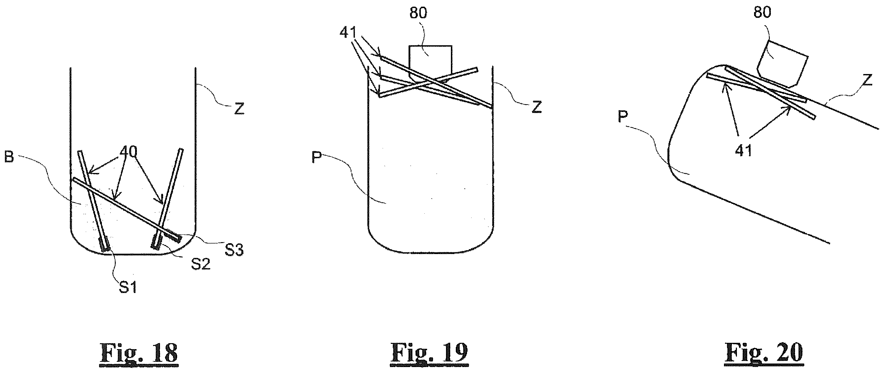

In praktischen Anwendungsfällen müssen oft mehrere unterschiedliche Substanzen in mehreren vorstehend beschriebenen Dosiervorgängen in den Zielbehälter zugegeben werden, um ein Endprodukt P herzustellen. Die Fig. 18 zeigt einen Zielbehälter Z, in dem sich eine (mittels einer anderen Methode zudosierte) grössere Menge einer Basis-Flüssigkeit B und drei mit unterschiedlichen Substanzen S1, S2 und S3 beladene Dosierwerkzeuge 40 befinden. In einem nächsten, hier nicht zeichnerisch dargestellten Schritt würde das ganze Behältnis Z inklusive der darin abgeworfenen Dosierwerkzeuge 40 gerührt, so dass sich die mit den Dosierwerkzeugen eingeführten Substanzen S1, S2 und S3 miteinander und mit der Basis-Substanz B homogen vermischen würden. Die Dosierwerkzeuge können dabei im Zielbehälter Z belassen werden, da sie ja chemisch inert sind und den Vorgang beim Mischen nicht negativ beeinflussen. In einem weiteren, hier ebenfalls nicht dargestellten Schritt kann dann das durch die Vermischung entstandene Produkt gefiltert werden, um die darin befindlichen Dosierwerkzeuge zu entfernen, oder es wird einfach nur eine geringe Menge des Produkt weiterverwendet, die aus dem Zielbehälter Z als Subsample entnommen wird.

Das bzw. die Dosierwerkzeuge können z.B. auch ferromagnetisch ausgebildet sein bzw. aus einem ferromagnetischen Material bestehen. Dies ist insbesondere im Hinblick auf das Handling der im Zielbehälter Z befindlichen Dosierwerkzeuge vorteilhaft. Ferromagnetisch ausgebildete Dosierwerkzeuge können z.B. im Zielbehälter als Rührorgane eingesetzt werden, wobei die Rührbewegung wie bei Magnetrührern üblich durch ein äusseres Magnetfeld bewirkt würde.

In Fig. 19 ist schematisch dargestellt, wie ferromagnetisch ausgebildete, z.B. aus Eisen oder Stahl bestehende Dosierwerkzeuge 41 mittels eines (beweglichen) Magneten 80 aus dem fertig gemischten Produkt im Zielbehälter Z entnommen werden können.

In der in Fig. 20 dargestellten Variante werden die ferromagnetischen Dosierwerkzeuge 41 nicht aus dem Zielbehälter Z entfernt, sondern mittels des Magneten 80 temporär im Zielbehälter Z festgehalten, während das fertige Produkt P durch Ausleeren des Aufnahmebehälters in ein weiteres (nicht dargestelltes) Gefäss überführt wird. Diese Variante ist speziell dann von Vorteil, wenn man eine Verschmutzung des Magneten 80 durch an ihm anhaftende, verschmutzte Dosierwerkzeuge 41 verhindern will.

## Patentansprüche

1. Vorrichtung zur Dosierung einer Substanz in einen Zielbehälter (Z), mit einem Dosierwerkzeug (40; 41; 42; 43; 44; 45; 46; 47; 48; 49) zur Aufnahme und Abgabe von Substanz (S), wobei
- das Dosierwerkzeug (40; 41; 42; 43; 44; 45; 46; 47; 48; 49) als Haftkörper ausgebildet ist, an dessen Oberfläche zu dosierende Substanz (S) haften kann,
- die Vorrichtung ein Greifwerkzeug (30) aufweist, mit welchem das Dosierwerkzeug (40; 41; 42; 43; 44; 45; 46; 47; 48; 49) aufnehmbar, haltbar und wieder abgebbar ist,
- die Vorrichtung dazu ausgebildet ist, das Dosierwerkzeug (40; 41; 42; 43; 44; 45; 46; 47; 48; 49) mit zu dosierender Substanz zu versehen, so dass diese am Dosierwerkzeug (40; 41; 42; 43; 44; 45; 46; 47; 48; 49) anhaftet, und mittels des Greifwerkzeugs (30) das Dosierwerkzeug (40; 41; 42; 43; 44; 45; 46; 47; 48; 49) mit der anhaftenden Substanz in den Zielbehälter (Z) abzugeben oder in den Zielbehälter (Z) einzutauchen, bis sich die anhaftende Substanz vom Dosierwerkzeug (40; 41; 42; 43; 44; 45; 46; 47; 48; 49) abgelöst hat;
**dadurch gekennzeichnet, dass**
- die Vorrichtung eine Waage (50; 70) zur Bestimmung der Menge am Dosierwerkzeug (40; 41; 42; 43; 44; 45; 46; 47; 48; 49) anhaftender Substanz (S) aufweist und
- die Vorrichtung eine Steuerung (100) für die Waage (50; 70) und für das Greifwerkzeug (30) aufweist.

2. Vorrichtung nach Anspruch 1, **dadurch gekennzeichnet, dass** der Haftkörper (40; 41; 42; 43; 44; 45; 46; 47; 49) als vorzugsweise zylindrischer Stab ausgebildet ist.

3. Vorrichtung nach Anspruch 1 oder 2, **dadurch gekennzeichnet, dass** der Haftkörper (42; 43) an seinem nicht zur Halterung durch das Greifwerkzeug (30) vorgesehenen Ende einer Tropfenbildung entgegenwirkend, vorzugsweise abgerundet oder spitz zulaufend, ausgebildet ist.

4. Vorrichtung nach Anspruch 1, **dadurch gekennzeichnet, dass** der Haftkörper (44) als spitz zulaufender, vorzugsweise konischer, Stab ausgebildet ist.

5. Vorrichtung nach einem der Ansprüche 1-4, **dadurch gekennzeichnet, dass** der Haftkörper (45; 46; 47) an seinem nicht zur Halterung durch das Greifwerkzeug (30) vorgesehenen Ende eine haftungserhöhende Oberflächenstruktur aufweist.

6. Vorrichtung nach Anspruch 1, **dadurch gekennzeichnet, dass** der Haftkörper (48) sphäroidisch, vorzugsweise kugelförmig, ausgebildet ist.

7. Vorrichtung nach einem der Ansprüche 1-6, **dadurch gekennzeichnet, dass** der Haftkörper (40; 41; 42; 43; 44; 45; 46; 47; 48; 49) einen maximalen Durchmesser im Bereich von 0.1 bis 3 mm, vorzugsweise 0.1 bis 2 mm, noch bevorzugter 0.1 bis 1 mm aufweist.

8. Vorrichtung nach einem der Ansprüche 1-7, **dadurch gekennzeichnet, dass** der Haftkörper (40; 41; 42; 43; 44; 45; 46; 47; 48; 49) aus einem chemisch inerten Material besteht.

9. Vorrichtung nach Anspruch 8, **dadurch gekennzeichnet, dass** der Haftkörper (40; 42; 43; 44; 45; 46; 47; 48) aus Glas besteht.

10. Vorrichtung nach einem der Ansprüche 1-8, **dadurch gekennzeichnet, dass** der Haftkörper (41; 49) ferromagnetisch ausgebildet ist oder elektrostatisch oder elektromagnetisch aufladbar ausgebildet ist.

11. Vorrichtung nach einem der Ansprüche 1-10, **dadurch gekennzeichnet, dass** die Waage (50) zur Messung des Gewichts eines Substanzbehälters (A) ausgebildet und angeordnet ist, aus dem die zu dosierende Substanz (S) entnehmbar ist.

12. Vorrichtung nach einem der Ansprüche 1-10, **dadurch gekennzeichnet, dass** die Waage (70) zur Messung des Gewichts des vom Greifwerkzeug (30) gehaltenen Dosierwerkzeugs (40; 41; 42; 43; 44; 45; 46; 47; 48; 49) ausgebildet und angeordnet ist.

13. Vorrichtung nach einem der vorangehenden Ansprüche, **dadurch gekennzeichnet, dass** sie mit einer mit der Steuerung (100) zusammenarbeitenden Heb- und Senkeinrichtung (32) ausgestattet ist, mittels welcher das Greifwerkzeug (30) heb-und senkbar ist.

14. Vorrichtung nach einem der vorangehenden Ansprüche, **dadurch gekennzeichnet, dass** sie einen mit der Steuerung (100) zusammenarbeitenden Roboterarm (10) aufweist, an welchem das Greifwerkzeug (30) befestigt ist, wobei das Greifwerkzeug (30) mittels des Roboterarms (10) vorzugsweise in allen drei Raumrichtungen sowie um eine vertikale Rotationsachse bewegbar ist.

15. Vorrichtung nach einem der vorangehenden Ansprüche, **dadurch gekennzeichnet, dass** sie ein Aufnahmegestell (39) für eine Anzahl von mehreren gleichen oder mehreren zumindest teilweise unterschiedlichen Dosierwerkzeugen (40; 41; 42; 43; 44; 45; 46; 47; 48; 49) oder mindestens einen Dispenser für Dosierwerkzeuge aufweist.

16. Vorrichtung nach einem der vorangehenden Ansprüche, **dadurch gekennzeichnet, dass** sie ein Dispensierwerkzeug (35) zum Versehen des Dosierwerkzeugs (40; 41; 42; 43; 44; 45; 46; 47; 48; 49) mit zu dosierender Substanz (S) aufweist.

17. Verfahren zur Dosierung einer Substanz in einen Zielbehälter (Z), **gekennzeichnet durch** die folgenden Schritte:
a) Aufnehmen eines als Haftkörper ausgebildeten Dosierwerkzeugs (40; 41; 42; 43; 44; 45; 46; 47; 48; 49) mittels eines Greifwerkzeugs (30);
b) Versehen des Dosierwerkzeugs (40; 41; 42; 43; 44; 45; 46; 47; 48; 49) mit zu dosierender Substanz (S);
c) Bestimmen der am Dosierwerkzeug (40; 41; 42; 43; 44; 45; 46; 47; 48; 49) anhaftenden Menge an Substanz (S);
d) falls die anhaftende Menge an Substanz (S) grösser als eine Sollmenge ist, Verwerfen des Dosierwerkzeugs (40; 41; 42; 43; 44; 45; 46; 47; 48; 49) und Wiederholen der Schritte a) - d) mit einem neuen Dosierwerkzeug (40; 41; 42; 43; 44; 45; 46; 47; 48; 49) so lange, bis die anhaftende Menge an Substanz (S) kleiner als die Sollmenge ist oder der Sollmenge entspricht;
e) falls die anhaftende Menge an Substanz (S) kleiner als die Sollmenge ist, weiteres Versehen des Dosierwerkzeugs (40; 41; 42; 43; 44; 45; 46; 47; 48; 49) mit zu dosierender Substanz und Wiederholen der Schritte c) - e) so lange, bis die anhaftende Menge an Substanz (S) der Sollmenge entspricht; und
f) wenn die anhaftende Menge an Substanz (S) der Sollmenge entspricht, Positionieren des Dosierwerkzeugs (40; 41; 42; 43; 44; 45; 46; 47; 48; 49) über dem Zielbehälter (Z) und Abwerfen des Dosierwerkzeugs (40; 41; 42; 43; 44; 45; 46; 47; 48; 49) mit der anhaftenden Menge an Substanz (S) in den Zielbehälter (Z) oder Eintauchen des Dosierwerkzeugs (40; 41; 42; 43; 44; 45; 46; 47; 48; 49) mit der anhaftenden Menge an Substanz (S) in den Zielbehälter (Z), bis sich die anhaftende Substanz vom Dosierwerkzeug (40; 41; 42; 43; 44; 45; 46; 47; 48; 49) abgelöst hat.

18. Verfahren nach Anspruch 17, **dadurch gekennzeichnet, dass** das Versehen des Dosierwerkzeugs (40; 41; 42; 43; 44; 45; 46; 47; 48; 49) mit zu dosierender Substanz folgende Schritte umfasst:
b1) Positionieren des Dosierwerkzeugs (40; 41; 42; 43; 44; 45; 46; 47; 48; 49) über einem Substanzbehälter (A);
b2) Absenken des Dosierwerkzeugs (40; 41; 42; 43; 44; 45; 46; 47; 48; 49) zum Eintauchen bzw. Einstechen des Dosierwerkzeugs in eine im Substanzbehälter (A) befindliche Substanz (S) und dadurch Versehen des Dosierwerkzeugs mit Substanz (S) und
b3) Anheben des Dosierwerkzeugs (40; 41; 42; 43; 44; 45; 46; 47; 48; 49) aus dem Substanzbehälter (A).

19. Verfahren nach Anspruch 17, **dadurch gekennzeichnet, dass** das Versehen des Dosierwerkzeugs (40; 41; 42; 43; 44; 45; 46; 47; 48; 49) mit zu dosierender Substanz folgende Schritte umfasst:
b1) Positionieren des Dosierwerkzeugs (40; 41; 42; 43; 44; 45; 46; 47; 48; 49) unter einem Dispensierwerkzeug (35) und
b2) Auftragen von Substanz auf das Dosierwerkzeug (40; 41; 42; 43; 44; 45; 46; 47; 48; 49) mittels des Dispensierwerkzeugs (35).

20. Verfahren nach einem der Ansprüche 17-19, **dadurch gekennzeichnet, dass** das Dosierwerkzeug (40; 41; 42; 43; 44; 45; 46; 47; 48; 49) zuerst mit einer flüssigen Haftsubstanz benetzt und anschliessend mit der zu dosierenden Substanz (S) versehen wird.

21. Verfahren nach einem der Ansprüche 17-20, **dadurch gekennzeichnet, dass** in einem Aufnahmegestell (39) eine Anzahl von mehreren gleichen oder zumindest teilweise unterschiedlichen Dosierwerkzeugen (40; 41; 42; 43; 44; 45; 46; 47; 48; 49) bereitgestellt wird und dass das vom Greifwerkzeug (30) aufzunehmende Dosierwerkzeug aus diesen bereitgestellten Dosierwerkzeugen ausgewählt wird.

22. Verfahren nach einem der Ansprüche 17-21, **dadurch gekennzeichnet, dass** die Aufnahme des Dosierwerkzeugs durch ein Greifwerkzeug (30) mit öffen- und schliessbaren Greifbacken (31) erfolgt.

23. Verfahren nach einem der Ansprüche 17-21, **dadurch gekennzeichnet, dass** das Dosierwerkzeug mittels Unterdruck vom Greifwerkzeug aufgenommen und gehalten wird.

24. Verfahren nach einem der Ansprüche 17-21, **dadurch gekennzeichnet, dass** das Dosierwerkzeug vom Greifwerkzeug elektromagnetisch aufgenommen und gehalten wird.

25. Verfahren nach einem der Ansprüche 17-24, **dadurch gekennzeichnet, dass** die Dosierung in einzelnen Teildosierungen durchgeführt wird, wobei, vorzugsweise unter der Kontrolle einer Waage (90), eine schrittweise Annäherung an eine geforderte Soll-Dosiermenge erfolgt.

26. Verfahren nach einem der Ansprüche 17-25, **dadurch gekennzeichnet, dass** die tatsächliche Menge der in den Zielbehälter (Z) insgesamt dosierten Substanz mittels einer Waage (90) gemessen wird.

27. Verfahren nach einem der Ansprüche 17-26, **dadurch gekennzeichnet, dass** es mit einer Vorrichtung nach einem der Ansprüche 1-16 durchgeführt wird.

## Claims

1. Apparatus for metering a substance into a target container (Z), having a metering tool (40; 41; 42; 43; 44; 45; 46; 47; 48; 49) for picking up and releasing substance (S), wherein
- the metering tool (40; 41; 42; 43; 44; 45; 46; 47; 48; 49) is configured as an adhesive body, to the surface of which the substance (S) to be metered is able to adhere,
- the apparatus has a gripping tool (30) with which the metering tool (40; 41; 42; 43; 44; 45; 46; 47; 48; 49) can be picked up, held and released again,
- the apparatus is configured to provide the metering tool (40; 41; 42; 43; 44; 45; 46; 47; 48; 49) with substance to be metered, so that the latter adheres to the metering tool (40; 41; 42; 43; 44; 45; 46; 47; 48; 49), and, by means of the gripping tool (30), to release the metering tool (40; 41; 42; 43; 44; 45; 46; 47; 48; 49) with the adherent substance into the target container (Z) or immerse it in the target container (Z) until the adherent substance has detached from the metering tool (40; 41; 42; 43; 44; 45; 46; 47; 48; 49);
**characterised in that**
- the apparatus has a scales (50; 70) for determining the amount of substance (S) adhering to the metering tool (40; 41; 42; 43; 44; 45; 46; 47; 48; 49) and
- the apparatus has a controller (100) for the scales (50; 70) and for the gripping tool (30).

2. Apparatus according to claim 1, **characterised in that** the adhesive body (40; 41; 42; 43; 44; 45; 46; 47; 49) is configured as a rod, preferably a cylindrical rod.

3. Apparatus according to claim 1 or 2, **characterised in that** the adhesive body (42; 43), at its end not intended for being held by the gripping tool (30), is configured to counteract droplet formation, preferably being rounded or tapering to a point.

4. Apparatus according to claim 1, **characterised in that** the adhesive body (44) is configured as a rod, preferably a conical rod, that tapers to a point.

5. Apparatus according to any one of claims 1-4, **characterised in that** the adhesive body (45; 46; 47), at its end not intended for being held by the gripping tool (30), has an adhesion-enhancing surface structure.

6. Apparatus according to claim 1, **characterised in that** the adhesive body (48) is spheroidal, preferably spherical.

7. Apparatus according to any one of claims 1-6, **characterised in that** the adhesive body (40; 41; 42; 43; 44; 45; 46; 47; 48; 49) has a maximum diameter in the range of from 0.1 to 3 mm, preferably from 0.1 to 2 mm, more preferably from 0.1 to 1 mm.

8. Apparatus according to any one of claims 1-7, **characterised in that** the adhesive body (40; 41; 42; 43; 44; 45; 46; 47; 48; 49) consists of a chemically inert material.

9. Apparatus according to claim 8, **characterised in that** the adhesive body (40; 42; 43; 44; 45; 46; 47; 48) consists of glass.

10. Apparatus according to any one of claims 1-8, **characterised in that** the adhesive body (41; 49) is ferromagnetically configured or configured to be electrostatically or electromagnetically chargeable.

11. Apparatus according to any one of claims 1-10, **characterised in that** the scales (50) is configured and arranged for measuring the weight of a substance container (A) from which the substance (S) to be metered is withdrawable.

12. Apparatus according to any one of claims 1-10, **characterised in that** the scales (70) is configured and arranged for measuring the weight of the metering tool (40; 41; 42; 43; 44; 45; 46; 47; 48; 49) held by the gripping tool (30).

13. Apparatus according to any one of the preceding claims, **characterised in that** it is equipped with a raising and lowering device (32) by means of which the gripping tool (30) can be raised and lowered, which device co-operates with the controller (100).

14. Apparatus according to any one of the preceding claims, **characterised in that** it has a robot arm (10) which co-operates with the controller (100) and to which the gripping tool (30) is attached, the gripping tool (30) being movable by means of the robot arm (10) preferably in all three spatial directions and also about a vertical rotational axis.

15. Apparatus according to any one of the preceding claims, **characterised in that** it has a rack (39) for a number of a plurality of identical or a plurality of at least to some extent different metering tools (40; 41; 42; 43; 44; 45; 46; 47; 48; 49) or at least one dispenser for metering tools.

16. Apparatus according to any one of the preceding claims, **characterised in that** it has a dispensing tool (35) for provision of the metering tool (40; 41; 42; 43; 44; 45; 46; 47; 48; 49) with substance (S) to be metered.

17. Method for metering a substance into a target container (Z), **characterised by** the following steps:
a) picking-up of a metering tool (40; 41; 42; 43; 44; 45; 46; 47; 48; 49) configured as an adhesive body by means of a gripping tool (30);
b) provision of the metering tool (40; 41; 42; 43; 44; 45; 46; 47; 48; 49) with substance (S) to be metered;
c) determination of the amount of substance (S) adhering to the metering tool (40; 41; 42; 43; 44; 45; 46; 47; 48; 49);
d) if the adherent amount of substance (S) is greater than a desired amount, discarding of the metering tool (40; 41; 42; 43; 44; 45; 46; 47; 48; 49) and repetition of steps a) - d) with a fresh metering tool (40; 41; 42; 43; 44; 45; 46; 47; 48; 49) until the adherent amount of substance (S) is less than the desired amount or corresponds to the desired amount;
e) if the adherent amount of substance (S) is less than the desired amount, further provision of the metering tool (40; 41; 42; 43; 44; 45; 46; 47; 48; 49) with substance to be metered and repetition of steps c) - e) until the adherent amount of substance (S) corresponds to the desired amount; and
f) if the adherent amount of substance (S) corresponds to the desired amount, positioning of the metering tool (40; 41; 42; 43; 44; 45; 46; 47; 48; 49) above the target container (Z) and dropping of the metering tool (40; 41; 42; 43; 44; 45; 46; 47; 48; 49) with the adherent amount of substance (S) into the target container (Z) or immersion of the metering tool (40; 41; 42; 43; 44; 45; 46; 47; 48; 49) with the adherent amount of substance (S) in the target container (Z) until the adherent substance has detached from the metering tool (40; 41; 42; 43; 44; 45; 46; 47; 48; 49).

18. Method according to claim 17, **characterised in that** the provision of the metering tool (40; 41; 42; 43; 44; 45; 46; 47; 48; 49) with substance to be metered comprises the following steps:
b1) positioning of the metering tool (40; 41; 42; 43; 44; 45; 46; 47; 48; 49) above a substance container (A);
b2) lowering of the metering tool (40; 41; 42; 43; 44; 45; 46; 47; 48; 49) for immersion or insertion of the metering tool into a substance (S) present in the substance container (A) and, as a result, provision of the metering tool with substance (S), and
b3) raising of the metering tool (40; 41; 42; 43; 44; 45; 46; 47; 48; 49) out of the substance container (A).

19. Method according to claim 17, **characterised in that** the provision of the metering tool (40; 41; 42; 43; 44; 45; 46; 47; 48; 49) with substance to be metered comprises the following steps:
b1) positioning of the metering tool (40; 41; 42; 43; 44; 45; 46; 47; 48; 49) below a dispensing tool (35) and
b2) application of substance to the metering tool (40; 41; 42; 43; 44; 45; 46; 47; 48; 49) by means of the dispensing tool (35).

20. Method according to any one of claims 17-19, **characterised in that** the metering tool (40; 41; 42; 43; 44; 45; 46; 47; 48; 49) is first wetted with a liquid adhesive substance and then provided with the substance (S) to be metered.

21. Method according to any one of claims 17-20, **characterised in that** a number of a plurality of identical or at least to some extent different metering tools (40; 41; 42; 43; 44; 45; 46; 47; 48; 49) are stored in a rack (39), and the metering tool to be picked up by the gripping tool (30) is selected from those stored metering tools.

22. Method according to any one of claims 17-21, **characterised in that** the picking-up of the metering tool is effected by a gripping tool (30) having openable and closable gripping jaws (31).

23. Method according to any one of claims 17-21, **characterised in that** the metering tool is picked up and held by the gripping tool by means of reduced pressure.

24. Method according to any one of claims 17-21, **characterised in that** the metering tool is picked up and held by the gripping tool electromagnetically.

25. Method according to any one of claims 17-24, **characterised in that** the metering operation is carried out in individual partial metering operations, wherein a stepwise approach to a required desired metered amount takes place, preferably while being monitored by a scales (90).

26. Method according to any one of claims 17-25, **characterised in that** the actual total amount of substance metered into the target container (Z) is measured by means of a scales (90).

27. Method according to any one of claims 17-26, **characterised in that** it is carried out using an apparatus according to any one of claims 1-16.

## Revendications

1. Dispositif pour doser une substance dans un récipient cible (Z), comportant un outil de dosage (40 ; 41 ; 42 ; 43 ; 44 ; 45 ; 46 ; 47 ; 48 ; 49) pour recevoir et distribuer la substance (S), dans lequel
- l'outil de dosage (40 ; 41 ; 42 ; 43 ; 44 ; 45 ; 46 ; 47 ; 48 ; 49) est réalisé sous forme de corps d'adhérence sur la surface duquel la substance à doser (S) peut adhérer,
- le dispositif comprend un outil de préhension (30) permettant de recevoir, de retenir et de remettre l'outil de dosage (40 ; 41 ; 42 ; 43 ; 44 ; 45 ; 46 ; 47 ; 48 ; 49),
- le dispositif est réalisé pour équiper l'outil de dosage (40 ; 41 ; 42 ; 43 ; 44 ; 45 ; 46 ; 47 ; 48 ; 49) de la substance à doser de manière à ce qu'elle adhère à l'outil de dosage (40 ; 41 ; 42 ; 43 ; 44 ; 45 ; 46 ; 47 ; 48 ; 49), et pour remettre l'outil de dosage (40 ; 41 ; 42 ; 43 ; 44 ; 45 ; 46 ; 47 ; 48 ; 49), équipé de la substance adhérente, dans le récipient cible (Z) ou pour l'immerger dans le récipient cible (Z) au moyen de l'outil de préhension (30), jusqu'à ce que la substance adhérente soit détachée de l'outil de dosage (40 ; 41 ; 42 ; 43 ; 44 ; 45 ; 46 ; 47 ; 48 ; 49) ;
**caractérisé en ce que**
- le dispositif comprend une balance (50 ; 70) pour déterminer la quantité de substance (S) adhérant à l'outil de dosage (40 ; 41 ; 42 ; 43 ; 44 ; 45 ; 46 ; 47 ; 48 ; 49), et
- le dispositif comprend une commande (100) pour la balance (50 ; 70) et pour l'outil de préhension (30).

2. Dispositif selon la revendication 1, **caractérisé en ce que** le corps d'adhérence (40 ; 41 ; 42 ; 43 ; 44 ; 45 ; 46 ; 47 ; 49) est réalisé sous la forme d'une tige de préférence cylindrique.

3. Dispositif selon la revendication 1 ou 2, **caractérisé en ce qu'**à son extrémité qui n'est pas destinée à être tenue par l'outil de préhension (30), le corps d'adhérence (42 ; 43) est réalisé pour empêcher la formation de gouttes, de préférence de manière arrondie ou de manière à converger en pointe.

4. Dispositif selon la revendication 1, **caractérisé en ce que** le corps d'adhérence (44) est réalisé sous la forme d'une tige convergeant en pointe, de préférence conique.

5. Dispositif selon l'une des revendications 1 à 4, **caractérisé en ce qu'**à son extrémité qui n'est pas destinée à être tenue par l'outil de préhension (30), le corps d'adhérence (45 ; 46 ; 47) présente une structure surfacique augmentant l'adhérence.

6. Dispositif selon la revendication 1, **caractérisé en ce que** le corps d'adhérence (48) est réalisé sous forme sphéroïdale, de préférence sphérique.

7. Dispositif selon l'une des revendications 1 à 6, **caractérisé en ce que** le corps d'adhérence (40 ; 41 ; 42 ; 43 ; 44 ; 45 ; 46 ; 47 ; 48 ; 49) présente un diamètre maximal dans la plage de 0,1 à 3 mm, de préférence de 0,1 à 2 mm, de manière particulièrement préférée de 0,1 à 1 mm.

8. Dispositif selon l'une des revendications 1 à 7, **caractérisé en ce que** le corps d'adhérence (40 ; 41 ; 42 ; 43 ; 44 ; 45 ; 46 ; 47 ; 48 ; 49) est constitué en un matériau chimiquement inerte.

9. Dispositif selon la revendication 8, **caractérisé en ce que** le corps d'adhérence (40 ; 42 ; 43 ; 44 ; 45 ; 46 ; 47 ; 48) est constitué en verre.

10. Dispositif selon l'une des revendications 1 à 8, **caractérisé en ce que** le corps d'adhérence (41 ; 49) est réalisé de façon ferromagnétique ou est réalisé de façon chargeable électrostatiquement ou électromagnétiquement.

11. Dispositif selon l'une des revendications 1 à 10, **caractérisé en ce que** la balance (50) est réalisée et agencée pour mesurer le poids d'un récipient à substance (A) dont la substance à doser (S) peut être prélevée.

12. Dispositif selon l'une des revendications 1 à 10, **caractérisé en ce que** la balance (50) est réalisée et agencée pour mesurer le poids de l'outil de dosage (40 ; 41 ; 42 ; 43 ; 44 ; 45 ; 46 ; 47 ; 48 ; 49) retenu par l'outil de préhension (30).

13. Dispositif selon l'une des revendications précédentes, **caractérisé en ce qu'**il est équipé d'un moyen de levage et d'abaissement (32) qui coopère avec la commande (100) et qui permet de relever et d'abaisser l'outil de préhension (30).

14. Dispositif selon l'une des revendications précédentes, **caractérisé en ce qu'**il comprend un bras de robot (10) qui coopère avec la commande (100) et auquel est fixé l'outil de préhension (30), l'outil de préhension (30) pouvant être déplacé de préférence dans toutes les trois directions spatiales et autour d'un axe de rotation vertical au moyen du bras de robot (10).

15. Dispositif selon l'une des revendications précédentes, **caractérisé en ce qu'**il comprend un bâti de logement (39) pour un certain nombre de plusieurs outils de dosage (40 ; 41; 42 ; 43 ; 44 ; 45 ; 46 ; 47 ; 48 ; 49) identiques ou au moins partiellement différents, ou il comprend au moins un distributeur pour outils de dosage.

16. Dispositif selon l'une des revendications précédentes, **caractérisé en ce qu'**il comprend un outil de distribution (35) pour équiper l'outil de dosage (40 ; 41; 42 ; 43 ; 44 ; 45 ; 46 ; 47 ; 48 ; 49) de la substance (S) à doser.

17. Procédé pour doser une substance dans un récipient cible (Z), **caractérisé par** les étapes suivantes consistant à :
a) recevoir un outil de dosage (40 ; 41 ; 42 ; 43 ; 44 ; 45 ; 46 ; 47 ; 48 ; 49), réalisé sous forme de corps d'adhérence, à l'aide d'un outil de préhension (30) ;
b) équiper l'outil de dosage (40 ; 41 ; 42 ; 43 ; 44 ; 45 ; 46 ; 47 ; 48 ; 49) d'une substance à doser (S) ;
c) déterminer la quantité de substance (S) adhérant à l'outil de dosage (40 ; 41 ; 42 ; 43 ; 44 ; 45 ; 46 ; 47 ; 48 ; 49) ;
d) si la quantité adhérente de substance (S) est supérieure à une quantité de consigne, rejeter l'outil de dosage (40 ; 41 ; 42 ; 43 ; 44 ; 45 ; 46 ; 47 ; 48 ; 49) et répéter les étapes a) - d) avec un nouvel outil de dosage (40 ; 41 ; 42 ; 43 ; 44 ; 45 ; 46 ; 47 ; 48 ; 49) jusqu'à ce que la quantité adhérente de substance (S) soit inférieure à la quantité de consigne ou corresponde à la quantité de consigne ;
e) si la quantité adhérente de substance (S) est inférieure à la quantité de consigne, continuer à équiper l'outil de dosage (40 ; 41 ; 42 ; 43 ; 44 ; 45 ; 46 ; 47 ; 48 ; 49) de substance à doser et répéter les étapes c) - e) jusqu'à ce que la quantité adhérente de substance (S) corresponde à la quantité de consigne ; et
f) si la quantité adhérente de substance (S) correspond à la quantité de consigne, positionner l'outil de dosage (40 ; 41 ; 42 ; 43 ; 44 ; 45 ; 46 ; 47 ; 48 ; 49) au-dessus du récipient cible (Z) et éjecter l'outil de dosage (40 ; 41 ; 42 ; 43 ; 44 ; 45 ; 46 ; 47 ; 48 ; 49) avec la quantité adhérente de substance (S) dans le récipient cible (Z) ou immerger l'outil de dosage (40 ; 41 ; 42 ; 43 ; 44 ; 45 ; 46 ; 47 ; 48 ; 49) avec la quantité adhérente de substance (S) dans le récipient cible (Z) jusqu'à ce que la substance adhérente soit détachée de l'outil de dosage (40 ; 41 ; 42 ; 43 ; 44 ; 45 ; 46 ; 47 ; 48 ; 49).

18. Procédé selon la revendication 17, **caractérisé en ce que** l'équipement de l'outil de dosage (40 ; 41 ; 42 ; 43 ; 44 ; 45 ; 46 ; 47 ; 48 ; 49) de la substance à doser comprend les étapes suivantes consistant à :
b1) positionner l'outil de dosage (40 ; 41 ; 42 ; 43 ; 44 ; 45 ; 46 ; 47 ; 48 ; 49) au-dessus d'un récipient à substance (A) ;
b2) abaisser l'outil de dosage (40 ; 41 ; 42 ; 43 ; 44 ; 45 ; 46 ; 47 ; 48 ; 49) pour immerger ou faire pénétrer l'outil de dosage dans une substance (S) située dans le récipient à substance (A) et ainsi équiper l'outil de dosage de la substance (S) et
b3) relever l'outil de dosage (40 ; 41 ; 42 ; 43 ; 44 ; 45 ; 46 ; 47 ; 48 ; 49) hors du récipient à substance (A).

19. Procédé selon la revendication 17, **caractérisé en ce que** l'équipement de l'outil de dosage (40 ; 41 ; 42 ; 43 ; 44 ; 45 ; 46 ; 47 ; 48 ; 49) de la substance à doser comprend les étapes suivantes consistant à :
b1) positionner l'outil de dosage (40 ; 41 ; 42 ; 43 ; 44 ; 45 ; 46 ; 47 ; 48 ; 49) au-dessous d'un outil de distribution (35) et
b2) appliquer la substance sur l'outil de dosage (40 ; 41 ; 42 ; 43 ; 44 ; 45 ; 46 ; 47 ; 48 ; 49) à l'aide de l'outil de distribution (35).

20. Procédé selon l'une des revendications 17 à 19, **caractérisé en ce que** l'outil de dosage (40 ; 41 ; 42 ; 43 ; 44 ; 45 ; 46 ; 47 ; 48 ; 49) est tout d'abord mouillé avec une substance adhérente liquide et ensuite il est équipé de la substance à doser (S).

21. Procédé selon l'une des revendications 17 à 20, **caractérisé en ce qu'**un certain nombre de plusieurs outils de dosage (40 ; 41; 42 ; 43 ; 44 ; 45 ; 46 ; 47 ; 48 ; 49) identiques ou au moins partiellement différents est mis à disposition dans un bâti de logement (39), et **en ce que** l'outil de dosage à recevoir par l'outil de préhension (30) est choisi parmi ces outils de dosage mis à disposition.

22. Procédé selon l'une des revendications 17 à 21, **caractérisé en ce que** la réception de l'outil de dosage s'effectue par un outil de préhension (30) ayant des mâchoires de préhension (31) susceptibles d'être ouvertes et fermées.

23. Procédé selon l'une des revendications 17 à 21, **caractérisé en ce que** l'outil de dosage est reçu et retenu par dépression au moyen de l'outil de préhension.

24. Procédé selon l'une des revendications 17 à 21, **caractérisé en ce que** l'outil de dosage est reçu et retenu par voie électromagnétique au moyen de l'outil de préhension.

25. Procédé selon l'une des revendications 17 à 24, **caractérisé en ce que** le dosage est effectué en dosages partiels individuels, et une approche progressive vers une quantité de dosage de consigne requise est effectuée de préférence sous le contrôle d'une balance (90).

26. Procédé selon l'une des revendications 17 à 25, **caractérisé en ce que** la quantité réelle de la substance dosée au total dans le récipient cible (Z) est mesurée à l'aide d'une balance (90).

27. Procédé selon l'une des revendications 17 à 26, **caractérisé en ce qu'**il est mis en œuvre à l'aide d'un dispositif selon l'une des revendications 1 à 16.
